# EUROPÄISCHE PATENTSCHRIFT

(11) **EP 2 596 043 B1**
(45) Veröffentlichungstag und Bekanntmachung des Hinweises auf die Patenterteilung: **14.05.2014**
(21) Anmeldenummer: 11738619.3
(22) Anmeldetag: 15.07.2011
(51) Int. Cl.: C08G 61/10, C08J 9/02, C08J 9/35, B01J 20/26, B01D 53/02, B01J 20/28, B01J 31/06, C08G 61/02

(54) **EINHEIT MIT PORÖSEN ORGANISCHEN POLYMEREN UND DEREN VERWENDUNG I**
UNIT COMPRISING POROUS ORGANIC POLYMERS AND USE THEREOF I
UNITÉ POURVUE DE POLYMÈRES ORGANIQUES POREUX ET UTILISATION DE LADITE UNITÉ

(30) Priorität: 24.07.2010 DE 102010032196
(43) Veröffentlichungstag der Anmeldung: 29.05.2013
(73) Patentinhaber: Blücher GmbH, 40699 Erkrath (DE)
(72) Erfinder: BÖHRINGER, Bertram, 42115 Wuppertal (DE); FICHTNER, Sven,, 14727 Premnitz (DE); KASKEL, Stefan, 01069 Dresden (DE); ROSE, Marcus, 01069 Dresden (DE)
(74) Vertreter: Strehlke, Ingo Kurt
(86) Internationale Anmeldenummer: PCT/EP2011/003525
(87) Internationale Veröffentlichungsnummer: WO 2012/016634

(56) Entgegenhaltungen:
- DE-A1- 2 106 396
- SHIN Y ET AL: "A novel low-temperature dendritic cyclotrimerization of 2,6-diacetyl pyridine leading to mesoporous carbon containing pyridine rings", MICROPOROUS AND MESOPOROUS MATERIALS, ELSEVIER SCIENCE PUBLISHING, NEW YORK, US, Bd. 123, Nr. 1-3, 1. Juli 2009 (2009-07-01), Seiten 345-348, XP026131311, ISSN: 1387-1811, DOI: 10.1016/J.MICROMESO.2009.03.033 [gefunden am 2009-03-28]
- MARCUS ROSE ET AL: "A new route to porous monolithic organic frameworks via cyclotrimerization", JOURNAL OF MATERIALS CHEMISTRY, THE ROYAL SOCIETY OF CHEMISTRY, CAMBRIDGE, GB, Bd. 21, 1. Januar 2011 (2011-01-01), Seiten 711-716, XP007920095, ISSN: 0959-9428, DOI: 10.1039/C0JM02998J

## Beschreibung

Die vorliegende Erfindung betrifft ein Filtermaterial, welches eine Einheit, umfassend eine Mehrzahl von Partikeln auf Basis von porösen organischen Polymeren, aufweist.

Die Entwicklung neuartiger poröser, insbesondere mikroporöser Materialien, insbesondere Adsorbenzien, ist ein wichtiger Zweig in den Materialwissenschaften. Viele Anwendungsgebiete verlangen nach leistungsfähigeren Materialien, und eine Vielzahl potenzieller, neuer Anwendungsgebiete hat sich in den letzten Jahren ergeben.

Bedarf an neuartigen porösen Materialien, insbesondere Adsorbenzien, besteht auf dem Gebiet der Speicherung verschiedener Gase, wie z. B. Wasserstoff, Methan etc., aber auch diverser Spezialgase; für Gase mit hoher Toxizität oder Explosionsgefahr kann beispielsweise durch adsorptive Speicherung das Gefährdungspotential herabgesetzt werden bzw. die Speicherkapazität erhöht werden.

Neue mikroporöse Materialien können aber auch Anwendung in der heterogenen Katalyse, insbesondere als Katalysator oder Katalysatorträger mit sehr hohen spezifischen Oberflächen und homogen verteilten aktiven Zentren, finden. Zudem sind Anwendungen in der Stofftrennung und Stoffreinigung, in selektiven Membranen, in der Sensortechnik etc. denkbar.

Die meisten kommerziell verwendeten mikroporösen Adsorbenzien sind anorganische Materialien, wie z. B. Zeolithe, Klathrate, Aktivkohle etc., welche aber teilweise höheren Anforderungen nicht mehr gerecht werden und durch leistungsfähigere neue Adsorbenzien ersetzt werden können.

In den letzen Jahren sind eine ganze Reihe neuer poröser bzw. mikroporöser Materialien bzw. Materialklassen auf rein organischer Basis oder auf Hybridbasis (z. B. organisch-anorganisch basierte Hybridpolymere) entwickelt worden.

Poröse Polymere aus Sicht der klassischen Polymerchemie sind die ersten auf diesem Gebiet. Erste Ergebnisse auf dem Gebiet der hochvernetzten Polymere (HCPs bzw. *Hypercrosslinked Polymers*) wurden bereits im Jahr 1969 publiziert. Die als so genannte Davankov-Harze bekannten hochvernetzten Polystyrole werden seit den 1990er Jahren kommerziell hergestellt und als Ionenaustauscherharze und Adsorptionsmittel verwendet.

Die Synthese hochvernetzter Polymere geht im allgemeinen von vorvernetzten Polymeren aus, die in einem geeigneten Lösungsmittel aufgequollen werden, wodurch zwischen den Polymerketten freier Raum entsteht. Im zweiten Schritt werden dann die gequollenen Ketten durch geeignete Reaktionen, wie z. B. Friedel-Crafts-Alkylierung etc., vernetzt. Wird dann das Lösemittel entfernt, bleiben die verbrückten Ketten starr voneinander getrennt, und der vormals freie Raum ist als Porenraum zugänglich. Es werden im Fall der Davankov-Harze spezifische Oberflächen von bis zu ca. 1.500 m²/g erreicht, und zwar mit Porengrößen die im Grenzbereich von Mikro- und Mesoporen liegen. In jüngster Zeit wurden aber auch andere HCPs, wie z. B. hochvemetzte Polyaniline, hergestellt.

Im Gegensatz zu HCPs, die postsynthetisch vernetzt werden, gibt es auch mikroporöse Polymere, die durch Einsatz von polyfunktionellen Monomeren hergestellt werden. Dadurch wird ebenfalls ein Netzwerk mit Porenraum erhalten, das durch seine Starrheit nicht kollabieren kann. Bekannt ist beispielsweise die Synthese von Polyamiden (PA) und Polyimiden (PI) mit einem tetrafunktionellen Spirobifluorenmonomer; die Polyimid-Netzwerke weisen spezifische Oberflächen von etwa 1.000 m²/g auf, während die Polyamid-Netzwerke ein zu kleines Porensystem haben, welches für Stickstoffrnoleküle nicht zugänglich ist.

Eine größere neue Klasse poröser Polymere, die in den letzten Jahren stark gewachsen ist, stellen die Polymere intrinsischer Mikroporosität (PIMs) dar. Synthetische Grundlage ist eine Kondensationsreaktion von aromatischen Monomeren mit Hydroxylgruppen und fluorierten oder chlorierten aromatischen Monomeren unter Bildung von Dioxanringen. Die entstehenden Polymere liegen im Gegensatz zu den vorgenannten HCPs nicht in hochvernetzter Form vor. Die Porosität kommt bei den PIMs durch eine ineffektive Packung der Polymerketten im Raum zustande, die aus der Starrheit der Monomermoleküle resultiert. Eine dichte Packung wird durch starre Ketten verhindert, und freier Porenraum bleibt zugänglich. Es wurden Oberflächen von bis zu ca. 1.065 m²/g beschrieben. Eine besondere Eigenschaft der PIMs ist die Kombination von Mikroporosität und Löslichkeit. Durch Lösen und Wiederentfernen des Lösemittels bleibt die Porosität erhalten, was die Verarbeitung der PIMs stark vereinfacht und neue Anwendungsmöglichkeiten eröffnet; z. B. wird die Herstellung von mikroporösen Membranen zur Trennung von Gasen, wie Kohlenstoffdioxid und Methan, oder die Adsorption von Phenol aus wässriger Lösung beschrieben.

Für alle vorgenannten mikroporösen Polymere wurden zahlreiche Untersuchungen zur Speicherung von Gasen, wie Wasserstoff und Methan, durchgeführt. Ein Nachteil poröser Polymere in der Gasspeicherung ist ihre geringe Dichte, da sie nur aus leichten Elementen bestehen. Dies führt - unabhängig vom Gas - zu relativ schlechten volumetrischen Speicherkapazitäten.

Ein weiterer Nachteil der bisher genannten porösen Polymere ist, dass ungeordnete Netzwerke mit meist breiten Porengrößenverteilungen vorliegen. Für sehr hohe spezifische Oberflächen mit guter Zugänglichkeit sind aber geordnete Netzwerke von Vorteil. Außerdem lassen sich die Poren dann durch einen modularen Aufbau der Gerüste für entsprechende Eigenschaften und Anwendungen maßschneidern.

Dieses Konzept ist in den mikroporösen metallorganischen Gerüstmaterialien bzw. Koordinationspolymeren (auch MOFs bzw. *Metall Organic Frameworks* genannt) umgesetzt. MOFs sind aus polyfunktionellen Molekülen (wie z. B. Carboxylaten) als organische Linker und Metallionen oder Metallcluster als anorganische Konnektoren aufgebaut. Diese dreidimensionalen Koordinationspolymere sind kristalline Verbindungen mit extrem hohen spezifischen Oberflächen. Nachteile fast aller MOFs sind aber die zumeist stark ausgeprägte Hydrolyseempfindlichkeit und eine gewisse Toxizität, welche in Abhängigkeit von der Art des Metalls auftreten kann (z. B. im Fall von Chrom etc.). Im Gegensatz dazu sind fast alle porösen Polymere hydrolysestabil, da ausschließlich starke kovalente Bindungen auftreten. Außerdem kann in Polymeren eine Toxizität durch Metalle ausgeschlossen werden, da sie nur aus leichten Elementen aufgebaut sind.

Das modulare Prinzip, nach dem MOFs aufgebaut sind, wurde auf kovalent gebundene, metallfreie Netzwerkverbindungen (COFs bzw. *Covalent Organic Frameworks*) übertragen. COFs werden durch Kondensationsreaktion von polyfunktionellen Boronsäuren entweder direkt untereinander zu Boroxinringen (B₃O₃) oder zusammen mit hydroxylfunktionalisierten Aromaten zu C₂O₂BRingen synthetisiert. Das Bauprinzip entspricht dem der MOFs, nur dass statt Metallionen oder Metallcluster Bor und Sauerstoff enthaltende Ringe als Konnektoren zwischen den organischen Linkern dienen. Die COFs sind die ersten kovalent gebundenen Netzwerke, die eine Ordnung aufweisen. Außerdem zeichnen sie sich durch relativ hohe spezifische Oberflächen aus, die mit denen der MOFs durchaus mithalten können. Nachteil der COFs ist die Hydrolyseempfindlichkeit der Boroxinringe, so dass die Verbindungen nach längerer Zeit unter Luftfeuchtigkeit zersetzt werden.

Die deutsche Offenlegungsschrift DE 2 106 396 A1 betrifft organische Polymere vom Polyphenyltyp sowie deren Herstellung durch Polycyclokondensation verschiedener aromatischer Di- und Triacetylverbindungen.

Schließlich betrifft die Druckschrift SHIN Y. ET AL., MICROPOROUS & MESOPOROUS MATERIALS 2009, 123, 345 - 348 die Herstellung einer mesoporösen stickstoffdotierten Kohle unter Verwendung eines mesoporösen Siliziumtemplats.

Es ist nunmehr die Aufgabe der vorliegenden Erfindung, ein Filtermaterial mit Partikeln auf Basis von porösen organischen Polymeren, insbesondere mit einer Einheit aus einer Mehrzahl von Partikeln auf Basis von porösen organischen Polymeren, bereitzustellen, welches die zuvor geschilderten Nachteile des Standes der Technik zumindest weitgehend vermeidet oder aber wenigstens abschwächt.

Eine weitere Aufgabe der vorliegenden Erfindung besteht in der Bereitstellung eines Filtermaterials mit Partikeln auf Basis von porösen organischen Polymeren, insbesondere mit einer Einheit aus einer Mehrzahl von Partikeln auf Basis von porösen organischen Polymeren, welches eine universelle Anwendbarkeit gewährleistet und sich insbesondere für das Gebiet der Filtration, für die Gasreinigung, für die Katalyse, für die Gasspeicherung und/oder für die Sorption, insbesondere Adsorption, vorzugsweise von Gasen, eignet.

Zur Lösung der zuvor geschilderten Aufgabenstellung schlägt die vorliegende Erfindung ein Filtermaterial, welches eine eine Mehrzahl bzw. Vielzahl von Partikeln auf Basis von porösen organischen Polymeren umfassende Einheit gemäß Anspruch 1 aufweist, vor; weitere, vorteilhafte Ausgestaltungen dieses Erfindungsaspekts sind der Gegenstand der betreffenden Unteransprüche.

Es versteht sich von selbst, dass im Folgenden besondere Ausgestaltungen, Ausführungsformen oder dergleichen, welche nur im Zusammenhang mit einem Erfindungsaspekt beschrieben sind, auch in Bezug auf die anderen Erfindungsaspekte entsprechend gelten, ohne dass dies einer ausdrücklichen Erwähnung bedarf.

Weiterhin ist bei allen nachstehend genannten relativen bzw. prozentualen, insbesondere gewichtsbezogenen Mengenangaben zu beachten, dass diese im Rahmen der vorliegenden Erfindung vom Fachmann derart auszuwählen sind, dass in der Summe stets 100 % resultieren. Dies versteht sich für den Fachmann aber von selbst.

Im Übrigen gilt, dass der Fachmann anwendungsbezogen oder einzelfallbedingt von den nachfolgend aufgeführten Zahlen-, Bereichs- oder Mengenangaben abweichen kann, ohne dass er den Rahmen der vorliegenden Erfindung verlässt.

Im Übrigen gilt, dass alle im folgenden genannten Parameterangaben oder dergleichen grundsätzlich mit genormten oder explizit angegebenen Bestimmungsverfahren oder aber mit dem Fachmann an sich geläufigen Bestimmungsmethoden bestimmt werden können.

Der Begriff der Mehrzahl oder synonym Vielzahl, wie er erfindungsgemäß verwendet wird, bezeichnet insbesondere mindestens 10 Partikel, insbesondere mindestens 100 Partikel, vorzugsweise mindestens 1.000 Partikel, besonders bevorzugt mindestens 10.000 Partikel, ganz besonders bevorzugt mindestens 100.000 Partikel, noch mehr bevorzugt mindestens 1.000.000 Partikel, je erfindungsgemäßer Einheit, wobei die Anzahl der Partikel je erfindungsgemäßer Einheit bis zu mehreren Millionen oder sogar mehreren Milliarden Partikel oder mehr betragen kann.

Gegenstand der vorliegenden Erfindung ist somit ein Filtermaterial, welches eine Einheit aufweist, wobei die Einheit eine Mehrzahl von Partikeln auf Basis von porösen organischen Polymeren umfasst, wobei die organischen Polymere durch Poly(acetylcyclotrimerisierung) von polyacetylfunktionalisierten (d. h. polyacetylierten bzw. mit mindestens zwei Acetylgruppen substituierten) Aromaten und/oder polyacetylfunktionalisierten (d. h. polyacetylierten bzw. mit mindestens zwei Acetylgruppen substituierten) Polycyclen erhältlich sind, wobei die Polymerpartikel in Pulverform oder in Kornform oder in Form von Agglomeraten vorliegen und wobei die Polymerpartikel auf mindestens einem Träger aufgebracht und/oder hieran fixiert sind.

Wie die Anmelderin nämlich in überraschender wie vollkommen unerwarteter Weise herausgefunden hat, lassen sich durch Poly(acetylcyclotrimerisierung) von polyacetylfunktionalisierten Aromaten oder Polycyclen poröse organische Polymerpartikel, insbesondere in Form einzelner Partikel oder in Form von Agglomeraten von Partikeln, herstellen, welche über ein inneres Porensystem bzw. über eine Porenstruktur verfügen, was eine universelle Anwendbarkeit ermöglicht, beispielsweise auf dem Gebiet der Filtration, der Gasreinigung, der Katalyse, der Gasspeicherung sowie der Sorption, insbesondere Adsorption.

Die durch Poly(acetylcyclotrimerisierung) erhältlichen Polymere bzw. Polymerpartikel - nachfolgend gelegentlich synonym auch als "OFCs" (*Organic Frameworks via Cyclotrimerization*)*,* "OFC-Materialien", "OFC-Verbindungen" oder dergleichen bezeichnet - verfügen über poröse, insbesondere mikroporöse, und im allgemeinen hydrophobe bzw. unpolare Polymemetzwerke, welche sie für die vorgenannten Anwendungen besonders geeignet erscheinen lassen.

Im Rahmen der vorliegenden Erfindung hat die Anmelderin erstmals und überraschenderweise herausgefunden, dass die erfindungsgemäß eingesetzten OFC-Materialien sich aufgrund ihrer Porosität in ausgezeichneter Weise für die vorgenannten Anwendungen eignen und in Bezug auf diese Anwendungen überraschenderweise zu der Leistungsfähigkeit herkömmlicher poröser Materialien zumindest gleichwertig sind, wenn nicht sogar die Leistungsfähigkeit der herkömmlichen porösen Materialien übertreffen.

In diesem Zusammenhang von Bedeutung ist auch die Tatsache, dass aufgrund der im Rahmen des Herstellungsverfahrens der OFC-Materialien einstellbaren bzw. maßschneiderbaren Porosität, insbesondere Porengröße und/oder Porengrößenverteilung und/oder spezifische Oberfläche, eine hohe Selektivität in Bezug auf das Sorptionsverhalten, insbesondere Adsorptionsverhalten, erreicht werden kann, wobei die Porosität, insbesondere die Porengröße und/oder Porengrößenverteilung, beispielsweise über die Art und/oder Größe der eingesetzten Ausgangsverbindungen gesteuert bzw. eingestellt bzw. maßgeschneidert werden kann (neben den Reaktionsbedingungen im einzelnen).

Insbesondere lassen sich Partikelgrößen und Porositäten, insbesondere Porengrößen und/oder Porengrößenverteilungen, der erfindungsgemäß eingesetzten OFC-Materialien durch Art und/oder Menge der eingesetzten Ausgangsverbindungen und/oder durch die Reaktionsführung in weiten Bereichen einstellen. Dementsprechend ist es möglich, dass die in der erfindungsgemäßen Einheit vorhandenen porösen Polymerpartikel Mikro-, Meso- und/oder Makroporen enthalten. Die Anwesenheit von Mikro-, Meso- und/oder Makroporen kann - wie auch andere nachfolgend bestimmte Eigenschaften (z. B. Porenvolumen, Porenoberfläche, BET-Oberfläche etc.) - beispielsweise durch Stickstoffadsorptionsmessungen gemäß DIN 66131, DIN 66135 und/oder DIN 66134, insbesondere bei Temperaturen von 77 K, bestimmt werden.

Im Rahmen der vorliegenden Erfindung bezeichnet der Begriff der Mikroporen solche Poren mit Porendurchmessern von bis zu 20 Å einschließlich, wohingegen der Begriff der Mesoporen solche Poren mit Porendurchmessern im Bereich von mehr als 20 Å (d. h. > 20 Å) bis 500 Å einschließlich bezeichnet und der Begriff der Makroporen solche Poren mit Porendurchmessern von mehr als 500 Å (d. h. > 500 Å) bezeichnet, wobei diese Definitionen der Poren den Definitionen entsprechen, wie sie beispielsweise in Pure Appl. Chem. 45 (1976), Seiten 71 ff., insbesondere Seite 79*,* zu finden sind:
- Mikroporen: Porendurchmesser_{Mikroporen} ≤ 20 Å
- Mesoporen: 20 Å < Porendurchmesser_{Mesoporen} ≤ 500 Å
- Makroporen: Porendurchmesser_{Makroporen} > 500 Å.

Ein besonderer Vorteil der in der erfindungsgemäßen Einheit zum Einsatz kommenden, speziellen, porösen organischen Polymere bzw. Polymerpartikel auf OFC-Basis ist die Tatsache, dass sich die Porosität, insbesondere Porengröße und/oder Porengrößenverteilung und/oder Porenoberfläche, dieser porösen Materialien - ebenso wie die Partikelgröße - im Rahmen der Synthese mittels Poly(acetylcyclotrimerisierung) gezielt einstellen lässt, insbesondere-wie zuvor beschrieben - durch Art und/oder Menge der Ausgangsverbindungen und/oder durch die Verfahrensführung im einzelnen (z. B. Verfahrensdauer, Verfahrenstemperaturen, Art der Katalyse, insbesondere der ausgewählten Katalysatoren, Durchführung als Festkörperreaktion oder in Lösung/Suspension etc.). So lassen sich in Abhängigkeit von den vorgenannten Modifikationsmöglichkeiten beispielsweise erfindungsgemäß einsetzbare OFCs mit monomodaler Verteilung der Porengröße herstellen, beispielsweise OFCs mit überwiegend mikroporösem Anteil oder aber OFCs mit überwiegend mesoporösem Anteil oder aber OFCs mit überwiegend makroporösem Anteil. Gleichermaßen ist es aber auch möglich, polymodale Porengrößenverteilungen (z. B. OFCs mit jeweils hohem, z. B. in etwa gleichem Anteil an Mikroporen einerseits und Meso- und/oder Makroporen andererseits) zu erhalten, sofern es im Rahmen der vorliegenden Anwendung gewünscht ist.

Dementsprechend können in Abhängigkeit von den jeweils eingesetzten Ausgangsverbindungen bzw. Eduktmolekülen (d. h. Ausgangsmonomeren) und den gewählten Reaktionsbedingungen die Eigenschaften der erfindungsgemäß zur Anwendung kommenden porösen OFC-Polymere bzw. OFC-Polymerpartikel, wie beispielsweise die inneren Oberflächen (BET) und/oder Porenvolumina und/oder Porengrößen etc., in weiten Bereichen variieren bzw. kontrolliert eingestellt werden, wie nachfolgend noch ausgeführt.

Im Rahmen der erfindungsgemäßen Einheit werden also, wie zuvor beschrieben, poröse organische Polymerpartikel eingesetzt, welche durch Poly(acetylcyclotrimerisierung) von polyacetylfunktionalisierten bzw. polyacetylierten Aromaten oder Polycyclen (z. B. Adamantan) erhältlich sind.

Der Begriff der Einheit, wie er erfindungsgemäß verwendet wird, bezeichnet insbesondere eine Mehrzahl bzw. Vielzahl von räumlich, insbesondere räumlich und funktional zusammenhängenden Polymeren bzw. Polymerpartikeln. Mit anderen Worten bezeichnet der Begriff der Einheit erfindungsgemäß eine Entität oder einen Verbund von räumlich, insbesondere räumlich und funktional zusammenhängenden porösen Polymeren bzw. Polymerpartikeln. Der räumliche, insbesondere räumliche und funktionale Zusammenhang kann dabei auf verschiedenste Weise realisiert sein: Beispielsweise kann der räumliche, insbesondere räumliche und funktionale Zusammenhang dadurch hergestellt sein, dass die einzelnen Polymerpartikel der erfindungsgemäßen Einheit lose, insbesondere in loser Schüttung, vorliegen, aber von einem äußeren Gehäuse, einer äußeren Hülle, einer äußeren Behausung oder dergleichen umgeben bzw. zu der erfindungsgemäßen Einheit zusammengefasst werden; eine solche Ausführungsform eignet sich beispielsweise dann, wenn die erfindungsgemäße Einheit für Filter, Filteranwendungen oder Gasspeicheranwendungen eingesetzt werden soll. Weiterhin besteht die Möglichkeit, dass der räumliche, insbesondere räumliche und funktionale Zusammenhang dadurch hergestellt wird, dass die einzelnen Polymerpartikel der erfindungsgemäßen Einheit auf einem gemeinsamen Träger aufgebracht bzw. hieran fixiert und über diesen Träger mittelbar räumlich verbunden bzw. in Verbindung gebracht sind, wobei bei dieser Ausführungsform die Belegung des Trägers derart sein kann, dass die einzelnen Polymerpartikel einander berühren oder aber beabstandet sind bzw. nicht berühren; eine solche Ausführungsform mit Trägermaterial ist beispielsweise im Fall der Anwendung von Flächenfiltern, insbesondere textilen Flächenfiltern, oder geträgerten Katalysatorsystemen von Bedeutung. Im Allgemeinen bezeichnet also der erfindungsgemäß verwendete Begriff der Einheit einen räumlich, insbesondere räumlich und funktional, mittelbar oder unmittelbar zusammenhängenden Verbund bzw. Entität einer Vielzahl von Partikeln auf Basis von porösen organischen Polymeren der vorgenannten Art.

Wie zuvor geschildert, kommen als Ausgangsverbindungen bzw. Ausgangsmonomere polyacetylfunktionalisierte Aromaten (z. B. mono-, bi- oder polycyclische, ein- oder mehrkernige, gegebenenfalls substituierte und/oder gegebenenfalls Heteroatome enthaltende Aromaten mit mindestens zwei Acetylgruppen) oder polyacetylfunktionalisierte bzw. polyacetylierte Polycyclen (z. B. mindestens zwei Acetylgruppen enthaltendes Adamantan etc.) zum Einsatz. In Bezug auf weitergehende Einzelheiten zu den einsetzbaren Ausgangsverbindungen bzw. Ausgangsmonomeren (Eduktmolekülen) kann auf die nachfolgenden Ausführungen verwiesen werden.

Wie zuvor geschildert, sind die erfindungsgemäß eingesetzten, porösen organischen Polymere durch Poly(acetylcyclotrimerisierung) erhältlich. Das Grundprinzip der Acetylcyclotrimerisierung wird durch die nachfolgende Reaktionsgleichung veranschaulicht, wobei in dieser Reaktionsgleichung der Rest R einen organischen Rest, insbesondere ein aromatisches System, bezeichnet:

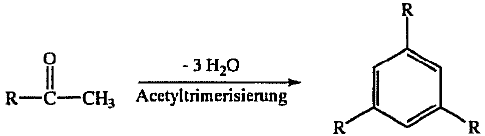

Die zuvor beschriebene Grundreaktion veranschaulicht das Prinzip der Acetylcyclotrimerisierung. Aufgrund der Tatsache, dass im Rahmen der vorliegenden Erfindung polyacetylfunktionalisierte bzw. polyacetylierte Aromaten und/oder Polycyclen zum Einsatz kommen, d. h. also solche Aromaten oder Polycyclen, welche mindestens zwei Acetylgruppen pro Molekül aufweisen, entstehen vernetzte, insbesondere räumlich vernetzte Polymerstrukturen, welche ein poröses polymeres Netzwerk ausbilden. Dies ist in der nachfolgenden Reaktionsgleichung vereinfacht dargestellt für den Fall, dass ausschließlich identische Ausgangsverbindungen zur Poly(acetylcyclotrimerisie-rung) gebracht werden, wobei in der nachfolgenden Reaktionsgleichung der Rest "Ar" für einen aromatischen Rest steht und "n" die Anzahl der Acetylgruppen je Ausgangsverbindung bezeichnet (wobei "n" eine ganze Zahl, wie z. B. 2, 3 oder 4, bezeichnet) und "3 m" die Anzahl der miteinander zur Reaktion gebrachten Ausgangsverbindungen bezeichnet (wobei "m" eine ganze Zahl darstellt, insbesondere mit Werten, wie nachfolgend noch beschrieben):

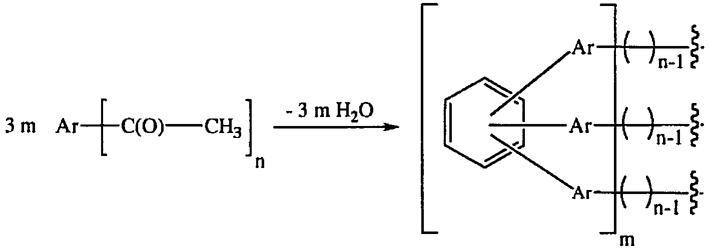

Im Allgemeinen wird die Poly(acetylcyclotrimerisierung) unter Katalyse, vorzugsweise säurekatalysiert, durchgeführt. Der hierbei eingesetzte Katalysator kann insbesondere ausgewählt sein aus der Gruppe von anorganischen und/oder organischen Säuren oder Salzen, Halogenwasserstoffen, Lewis-Säuren sowie deren Mischungen oder Kombinationen. Als anorganische Säure für die Katalyse der Poly(acetylcyclotrimerisierung) eignet sich beispielsweise konzentrierte Schwefelsäure, insbesondere in Kombination mit einem schwefelsauren Salz, wie Kaliumpyrosulfat, wobei eine Katalysatorkombination von Kaliumpyrosulfat und konzentrierter Schwefelsäure beispielsweise insbesondere geeignet ist, wenn die Poly(acetylcyclotrimerisierung) in fester Phase bzw. als Festkörperreaktion durchgeführt wird, wie nachfolgend noch im Detail geschildert.

Als Lewis-Säuren eignen sich beispielsweise FeCl₃, AlC₃, TiCl₄ oder Titantrichloridtriflat TiCl₃(OTf). Als Halogenwasserstoff kann insbesondere Chlorwasserstoff zum Einsatz gelangen, wobei der Halogenwasserstoff, insbesondere Chlorwasserstoff, auch *in situ* generiert werden kann, insbesondere durch Hydrolyse von Siliziumtetrachlorid SiCl₄ mit Alkohol, insbesondere Ethanol. Die Poly(acetylcyclotrimerisierung) kann grundsätzlich entweder als Festkörper- und/oder Feststoffreaktion (d. h. als Reaktion in fester Phase) oder aber als Reaktion in flüssiger Phase, insbesondere in Lösung oder Dispersion, vorzugsweise Lösung, durchgeführt werden, wobei die Reaktion in flüssiger Phase erfindungsgemäß bevorzugt ist.

Die Poly(acetylcyclotrimerisierung) kann in einem weiteren Temperaturbereich durchgeführt werden, insbesondere bei Temperaturen im Bereich von -50 °C bis 250 °C, insbesondere -5 °C bis 200 °C, vorzugsweise 0 °C bis 150 °C.

Weiterhin kann die Poly(acetylcyclotrimerisierung) in weiten Druckbereichen durchgeführt werden, insbesondere bei einem Druck im Bereich von 0,01 bis 50 bar absolut, insbesondere 0,1 bis 10 bar absolut, vorzugsweise unter Atmosphärendruck (1,013 bar absolut). Drücke oberhalb des Atmosphärendrucks eignen sich insbesondere, wenn die Reaktion in fester Phase durchgeführt wird.

Durch die Poly(acetylcyclotrimerisierung) der speziell ausgewählten polyacetylierten Ausgangsverbindungen resultieren poröse organische Polymere bzw. Polymerpartikel, welche jeweils eine nichtlineare vernetzte, insbesondere zwei- und/oder dreidimensional vernetzte, vorzugsweise sternförmig und/oder tetraederförmig vernetzte Struktur, aufweisen. Dieses Netzwerk ist verantwortlich für die Porosität der auf diese Weise erhältlichen organischen Polymere bzw. Polymerpartikel. Infolge der nichtlinearen und vernetzten Struktur lassen sich für die erfindungsgemäß eingesetzten Polymere bzw. Polymerpartikel keine mittleren Molekulargewichte oder andere Parameter, welche üblicherweise für die Charakterisierung linearer Polymere herangezogen werden, bestimmen bzw. angeben. Daher können im Fall der vorliegenden Erfindung die eingesetzten Polymere verlässlich nur über das Herstellungsverfahren charakterisiert werden.

Was die erfindungsgemäß eingesetzten porösen organischen Polymere bzw. Polymerpartikel anbelangt, so weisen diese jeweils eine Vielzahl sich wiederholender Struktureinheiten vom Typ eines 1,3,5-substituierten Phenylrests mit jeweils aromatischen und/oder polycyclischen Resten in der 1-, 3- und 5-Position auf. Die Anzahl der sich wiederholenden Struktureinheiten im polymeren Netzwerk kann in weiten Grenzen variieren: Im Allgemeinen beträgt die Anzahl der sich wiederholenden Struktureinheiten der vorgenannten Art je Polymermolekül mindestens 25, insbesondere mindestens 50, vorzugsweise mindestens 75, besonders bevorzugt mindestens 100; dabei kann die Anzahl der sich wiederholenden Struktureinheiten je Polymermolekül bis zu 10.000.000, insbesondere bis zu 5.000.000, vorzugsweise bis zu 1.000.000, besonders bevorzugt bis zu 500.000, betragen. Insbesondere kann die Anzahl der sich wiederholenden Struktureinheiten des vorgenannten Typs je Polymermolekül im Bereich von 25 bis 10.000.000, insbesondere 50 bis 5.000.000, vorzugsweise 75 bis 1.000.000, besonders bevorzugt 100 bis 500.000, liegen.

Gemäß einer besonderen Ausführungsform der vorliegenden Erfindung weisen die in der erfindungsgemäßen Einheit eingesetzten, porösen organischen Polymere jeweils eine Vielzahl sich wiederholender Struktureinheiten vom Typ 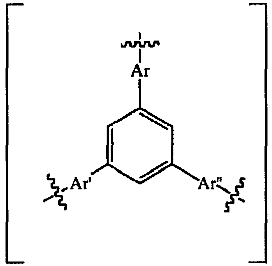 auf, wobei die Reste Ar, Ar' und Ar", jeweils unabhängig voneinander, einen gegebenenfalls substituierten aromatischen oder polycyclischen, vorzugsweise aromatischen Rest bezeichnen. Dabei kann die Anzahl der sich wiederholenden Struktureinheiten je Polymermolekül mindestens 25, insbesondere mindestens 50, vorzugsweise mindestens 75, besonders bevorzugt mindestens 100, betragen; die Anzahl der sich wiederholenden Struktureinheiten kann dabei je Polymermolekül bis zu 10.000.000, insbesondere bis zu 5.000.000, vorzugsweise bis zu 1.000.000, besonders bevorzugt bis zu 500.000, betragen. Insbesondere kann die Anzahl der sich wiederholenden Struktureinheiten je Polymermolekül im Bereich von 25 bis 10.000.000, insbesondere 50 bis 5.000.000, vorzugsweise 75 bis 1.000.000, besonders bevorzugt 100 bis 500.000, liegen.

Gemäß einer wiederum besonderen Ausführungsform der vorliegenden Erfindung können die erfindungsgemäß eingesetzten, porösen organischen Polymere jeweils eine Vielzahl sich wiederholender Struktureinheiten vom Typ 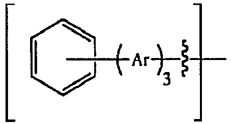 aufweisen, wobei der Rest Ar einen gegebenenfalls substituierten aromatischen oder polycyclischen, vorzugsweise aromatischen Rest bezeichnet. Dabei kann die Anzahl der sich wiederholenden Struktureinheiten je Polymermolekül insbesondere mindestens 25, insbesondere mindestens 50, vorzugsweise mindestens 75, besonders bevorzugt mindestens 100, betragen; insbesondere kann dabei die Anzahl der sich wiederholenden Struktureinheiten je Polymermolekül bis zu 10.000.000, insbesondere bis zu 5.000.000, vorzugsweise bis zu 1.000.000, besonders bevorzugt bis zu 500.000, betragen. Insbesondere kann die Anzahl der sich wiederholenden Struktureinheiten je Polymermolekül im Bereich von 25 bis 10.000.000, insbesondere 50 bis 5.000.000, vorzugsweise 75 bis 1.000.000, besonders bevorzugt 100 bis 500.000, liegen.

Ein besonderer Vorteil der vorliegenden Erfindung ist darin zu sehen, dass die erfindungsgemäß eingesetzten organischen Polymere bzw. Polymerpartikel thermisch beständig sind, insbesondere bis zu Temperaturen von mindestens 100 °C, insbesondere mindestens 150 °C, vorzugsweise mindestens 200 °C, besonders bevorzugt mindestens 300 °C.

Darüber hinaus sind die erfindungsgemäß eingesetzten organischen Polymere bzw. Polymerpartikel gegenüber protischen Lösemitteln oder Medien beständig, insbesondere hydrolysebeständig.

Darüber hinaus sind die erfindungsgemäß eingesetzten organischen Polymere bzw. die Polymerpartikel im Allgemeinen hydrophob ausgebildet und weisen insbesondere hydrophobe Oberflächen auf, was durch die Art ihrer Herstellung begründet ist. Daher eignen sie sich insbesondere für die Speicherung und/oder Sorption, insbesondere Adsorption, unpolarer Substanzen bzw. Gase.

Wie gleichermaßen geschildert, sind die erfindungsgemäß eingesetzten organischen Polymere bzw. Polymerpartikel im Allgemeinen unpolar ausgebildet und weisen unpolare Oberflächen auf, was ihre Eignung gerade für die Speicherung bzw. Sorption, insbesondere Adsorption, unpolarer Substanzen bzw. Gase erklärt.

Wie zuvor geschildert, bilden die erfindungsgemäß eingesetzten organischen Polymere bzw. Polymerpartikel ein hydrophobes und/oder polares, poröses, insbesondere mikroporöses, polymeres Netzwerk aus.

Wie zuvor beschrieben, weisen die als Ausgangsverbindungen bzw. Ausgangsmonomere eingesetzten polyacetylfunktionalisierten Aromaten oder Polycyclen mindestens zwei Acetylgruppen je Molekül, insbesondere zwei, drei oder vier Acetylgruppen je Molekül, auf. Mit anderen Worten sind im Allgemeinen die als Ausgangsverbindungen bzw. Ausgangsmonomere für die Poly(acetylcyclotrimerisierung) eingesetzten polyacetylfunktionalisierten Aromaten oder Polycyclen mindestens zweifach acetylgruppensubstituiert, insbesondere zwei-, drei- oder vierfach acetylgruppensubstituiert, ausgebildet. Um die Partikelgrößen und/oder die Porositäten und/oder die Vernetzungsgrade und/oder die Polymergrößen maßzuschneidern bzw. einzustellen oder zu steuern, können auch Mischungen unterschiedlicher Ausgangsverbindungen der vorgenannten Art, insbesondere Mischungen von Ausgangsverbindungen mit unterschiedlicher Acetylgruppenanzahl, eingesetzt bzw. zur Reaktion gebracht werden.

Gemäß einer besonderen Ausführungsform der vorliegenden Erfindung sind die erfindungsgemäß für die Poly(acetylcyclotrimerisierung) zum Einsatz kommenden polyacetylfunktionalisierten Aromaten oder Polycyclen insbesondere ausgewählt sind aus der Gruppe der folgenden Verbindungen und ihrer Kombinationen oder Mischungen, wobei in den nachfolgenden Formeln der Rest "Ac" eine Acetylgruppe CH₃-C(O)- bezeichnet und der Rest "R", jeweils unabhängig (d. h. somit auch möglich mit verschiedenen Bedeutungen innerhalb desselben Moleküls), Wasserstoff oder einen organischen Rest, insbesondere ausgewählt aus der Gruppe von Alkyl, Alkenyl, Alkinyl, Alkoxy und Aryl, einem Halogen oder einer Amingruppe, bezeichnet:

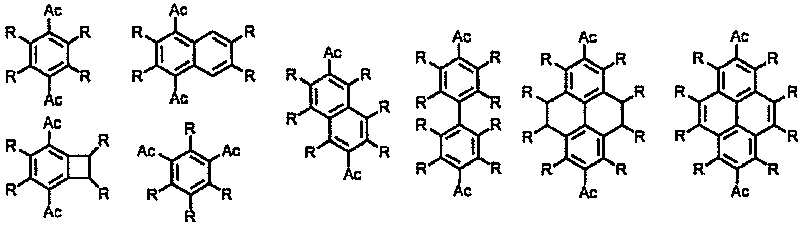

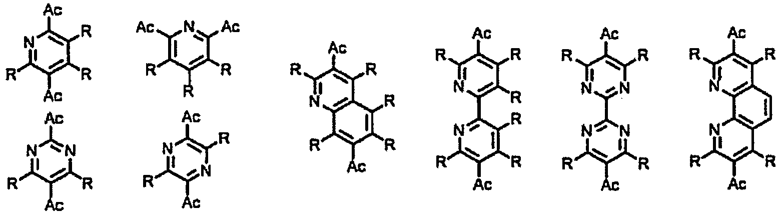

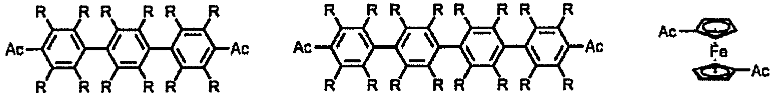

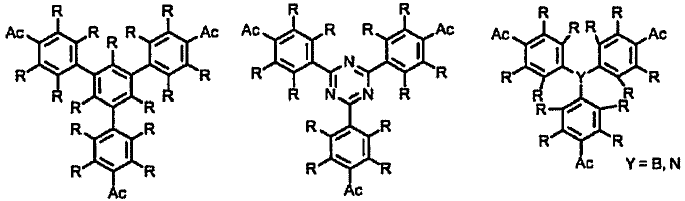

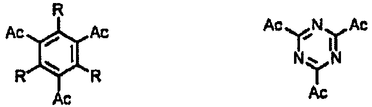

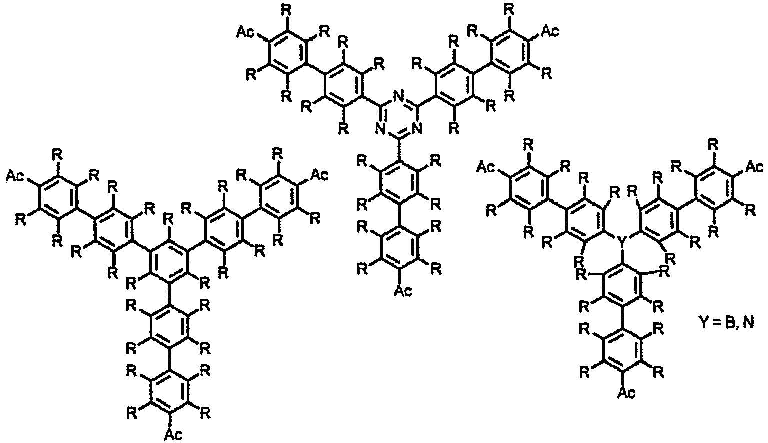

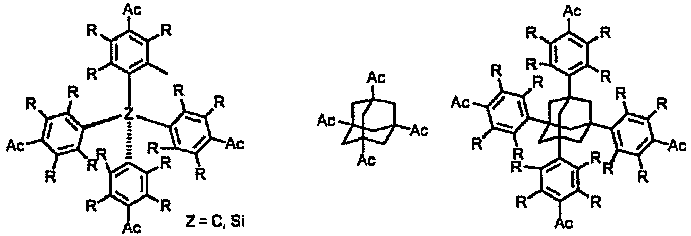

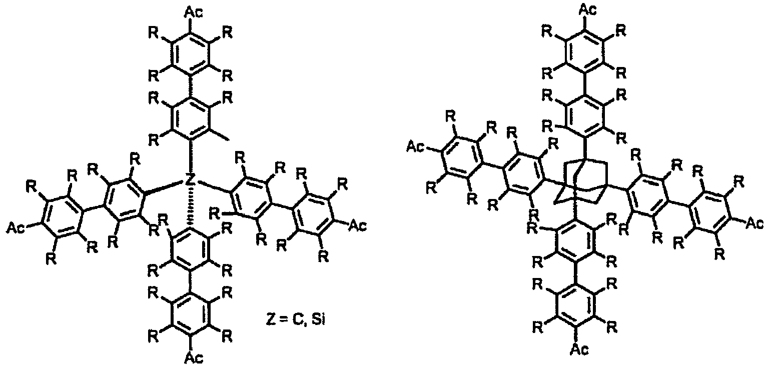

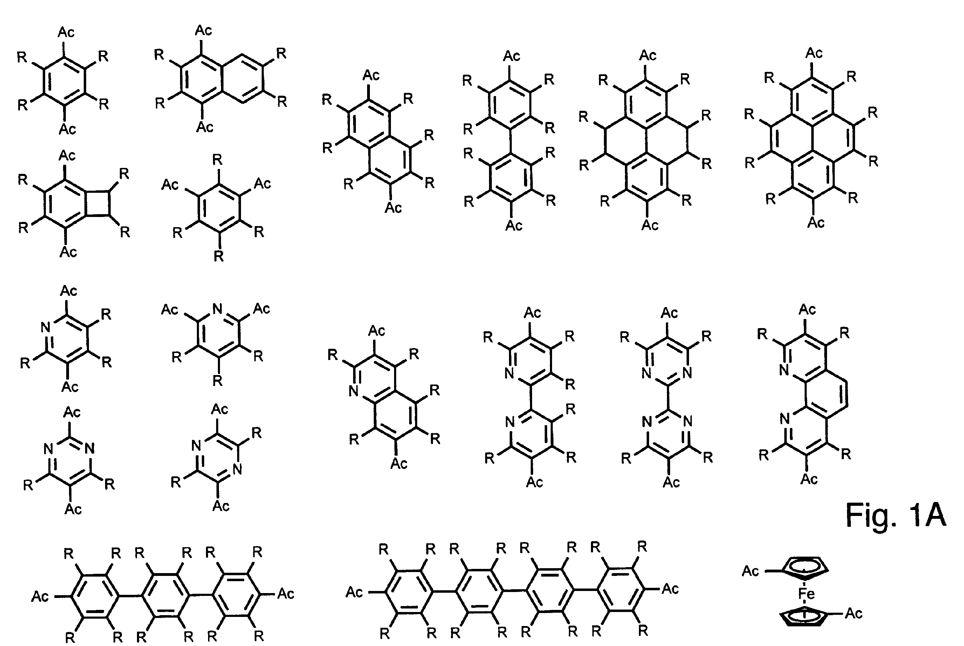

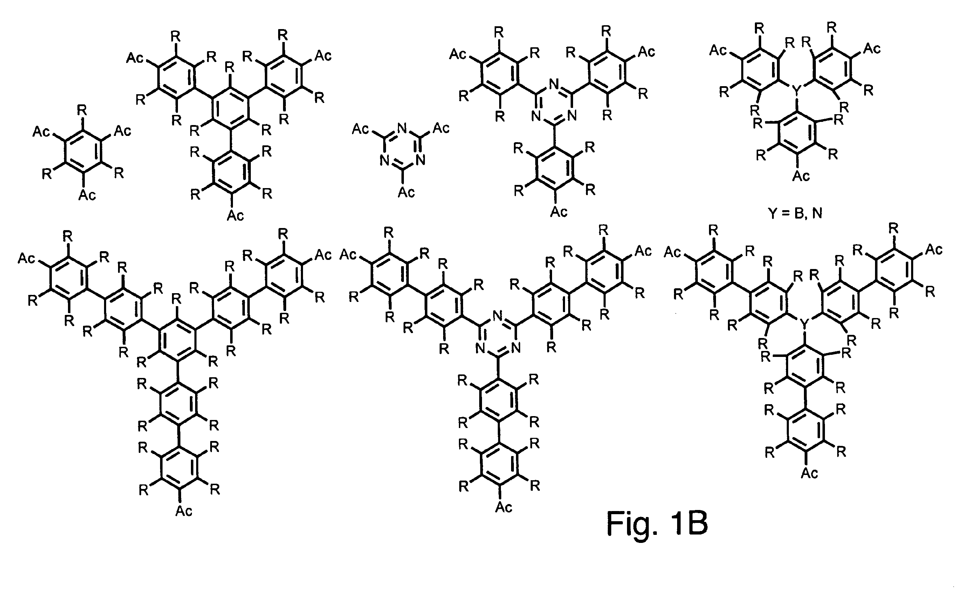

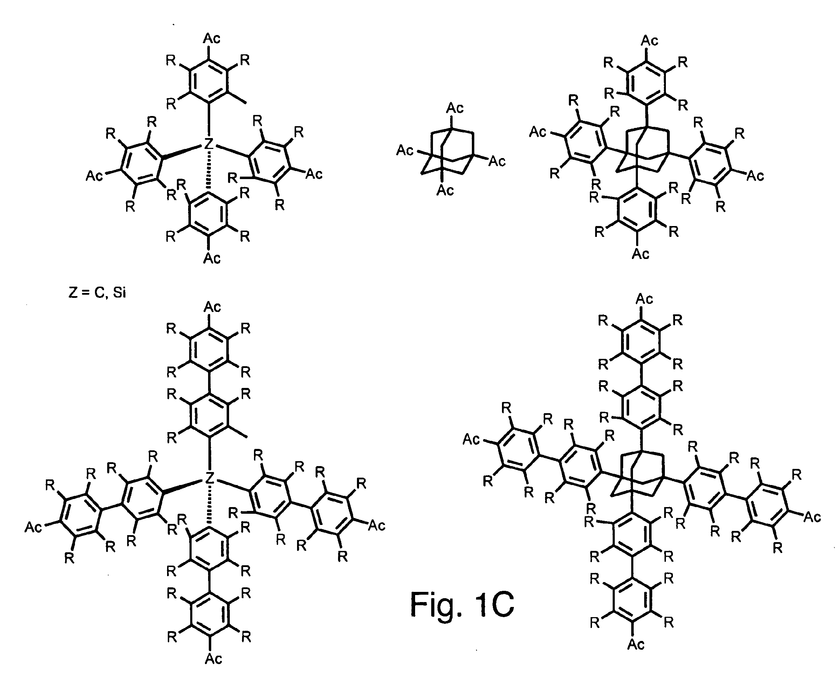

Die Figuren gemäß Fig. 1A bis 1C zeigen erfindungsgemäß einsetzbare Ausgangsverbindungen bzw. Eduktmoleküle ("Linker") für die Herstellung der in der erfindungsgemäßen Einheit einsetzbaren, porösen organischen Polymere, wobei in den in Fig. 1A bis 1C dargestellten Formeln der Rest "Ac" eine Acetylgruppe CH₃-(O)- bezeichnet und der Rest "R", jeweils unabhängig (d. h. somit auch möglich mit verschiedenen Bedeutungen innerhalb desselben Moleküls), Wasserstoff oder einen organischen Rest, insbesondere ausgewählt aus der Gruppe von Alkyl, Alkenyl, Alkinyl, Alkoxy und Aryl, einem Halogen oder einer Amingruppe, bezeichnet. Während Fig. 1A bifunktionelle Linkermoleküle zeigt, zeigen Fig. 1B bzw. 1C trifunktionelle bzw. tetrafunktionelle Linkermoleküle.

Erfindungsgemäß sind die Polymerpartikel der erfmdungsgemäßen Einheit auf mindestens einem Träger bzw. Trägermaterial aufgebracht, insbesondere hieran fixiert. Je nach Anwendungszweck können geeignete Träger bzw. Trägermaterialien beispielsweise ausgewählt sein aus der Gruppe von textilen Materialien (z. B. textilen Flächengebilden, wie Geweben, Gewirken etc., oder Schaumstoffen), Trägermaterialien für Katalysatoren (z. B. keramischen Trägem oder Kohlenstoffträgern etc.), Kunststoffen bzw. kunststoffbasierten Materialien, keramischen Materialien, metallischen Materialien oder deren Kombinationen. So kann es beispielsweise vorgesehen sein, dass der Träger, insbesondere im Fall eines textilen Trägermaterials, gasdurchlässig, insbesondere luftdurchlässig, ausgebildet sein kann; dabei kann der Träger insbesondere eine Gasdurchlässigkeit, insbesondere Luftdurchlässigkeit, von mindestens 10 l·m²·s⁻¹, insbesondere mindestens 30 l·m²·s⁻¹, vorzugsweise mindestens 50 l·m⁻²·s⁻¹, besonders bevorzugt mindestens 100 l·m⁻²·s⁻¹, ganz besonders bevorzugt mindestens 500 l·m⁻²·s⁻¹, und/oder bis zu 10.000 l·m⁻²·s⁻¹, insbesondere bis zu 20.000 l·m⁻²·s⁻¹, bei einem Strömungswiderstand von 127 Pa aufweisen. Gemäß dieser Ausführungsform kann der Träger eine dreidimensionale Struktur aufweisen (wobei der Träger beispielsweise als vorzugsweise offenporiger Schaumstoff, besonders bevorzugt als Polyurethanschaumstoff, ausgebildet sein kann) oder aber alternativ eine zweidimensionale und/oder flächige Struktur aufweisen (wobei der Träger in diesem Fall als vorzugsweise textiles Flächengebilde ausgebildet sein kann, insbesondere als ein Gewebe, Gewirke, Gestricke, Gelege oder Textilverbundstoff, insbesondere Vlies bzw. Nonwoven, und/oder wobei der Träger in diesem Fall ein Flächengewicht von 5 bis 1.000 g/m², insbesondere 10 bis 500 g/m², bevorzugt 25 bis 450 g/m², aufweisen kann).

Was die porösen organischen Polymerpartikel als solche anbelangt, so liegen diese in Pulverform oder aber in Kornform, insbesondere Kugelform, oder in Form von Agglomeraten vor.

Dabei kann die Teilchengröße der Polymerpartikel oder deren Agglomeraten in weiten Bereichen variieren. Üblicherweise weisen die Polymerpartikel oder deren Agglomerate Teilchengrößen im Bereich von 0,0001 µm bis 10 mm, insbesondere 0,001 µm bis 5 mm, vorzugsweise 0,005 µm bis 3 mm, besonders bevorzugt 0,01 µm bis 2 mm, ganz besonders bevorzugt 0,1 µm bis 1,5 mm, auf.

Die mittleren Teilchengrößen der erfindungsgemäß eingesetzten Polymerartikel bzw. deren Agglomerate, bestimmt als so genannter D50-Wert, liegen üblicherweise im Bereich von 0,001 µm bis 8 mm, insbesondere 0,005 µm bis 2 mm, vorzugsweise 0,01 µm bis 1 mm.

Die Bestimmung der Teilchengrößen und mittleren Teilchengrößen kann mit dem Fachmann an sich bekannten Methoden erfolgen. Für die Teilchengrößenbestimmung eignet sich insbesondere ASTM D2862-97/04.

Die Parameterangaben betreffend die Charakterisierung der Porosität und der damit in Zusammenhang stehenden Parameter, wie insbesondere Gesamtporosität, innere Oberfläche, Porengröße, Porengrößeverteilung, Adsorptionsvolumen, adsorbiertes Volumen, Gesamtporenvolumen, Mikroporenvolumenanteil etc., ergeben sich jeweils aus der Stickstoffisotherme des betreffenden bzw. vermessenen OFC-Materials, insbesondere der Stickstoffisotherme bei tiefen Temperaturen (üblicherweise bei T = 77 Kelvin, sofern nachfolgend nichts Gegenteiliges angegeben ist).

Wie zuvor beschrieben, weist das erfindungsgemäß eingesetzte OCF-Material innere Hohlräume, insbesondere Poren, auf, d. h. die erfindungsgemäß eingesetzten organischen Polymere (OFCs) sind porös ausgebildet. Hieraus resultieren relativ hohe innere Oberflächen und Gesamtporenvolumina.

Gleichermaßen kann auch das Gesamtporenvolumen der erfindungsgemäß eingesetzten Polymerpartikel in weiten Bereichen variieren. Insbesondere weisen die erfindungsgemäß eingesetzten Polymerpartikel ein Gesamtporenvolumen von mindestens 0,05 cm³/g, insbesondere mindestens 0,1 cm³/g, vorzugsweise mindestens 0,2 cm³/g, auf; weiterhin weisen die erfindungsgemäß eingesetzten Polymerpartikel ein Gesamtporenvolumen im Allgemeinen von bis zu 2,0 cm³/g, insbesondere bis zu 3,0 cm³/g, vorzugsweise bis zu 4,0 cm³/g, besonders bevorzugt bis zu 5,0 cm³/g, auf. Üblicherweise weisen die erfindungsgemäß eingesetzten Polymerpartikel ein Gesamtporenvolumen im Bereich von 0,05 cm³/g bis 5,0 cm³/g, insbesondere 0,1 cm³/g bis 4,0 cm³/g, vorzugsweise 0,2 cm³/g bis 3,0 cm³/g, auf. Die vorgenannten Gesamtporenvolumina beziehen sich insbesondere auf solche Werte, welche nach der so genannten Gurvich-Methode bestimmt worden sind (p/p₀ = 0,995). Was die Bestimmung des Gesamtporenvolumens nach Gurvich anbelangt, so handelt es sich um eine dem Fachmann auf diesem Gebiet an sich bekannte Mess-Bestimmungsmethode; zu weitergehenden Einzelheiten bezüglich der Bestimmung des Gesamtporenvolumens nach Gurvich kann beispielsweise verwiesen werden auf L. Gurvich (1915), J. Phys. Chem. Soc. Russ. 47, 805, sowie auf S. Lowell et al., Characterization of Porous Solids and Powders: Surface Area Pore Size and Density, Kluwer Academic Publishers, Article Technology Series, Seiten 111 ff*.*

Gemäß einer besonderen Ausführungsform sind mindestens 20 %, insbesondere mindestens 30 %, vorzugsweise mindestens 40 %, besonders bevorzugt mindestens 50 %, des Gesamtporenvolumens der Polymerpartikel durch Mikroporen mit Porendurchmessern von ≤ 20 Å gebildet. Im Allgemeinen sind 20 % bis 99 %, insbesondere 30 % bis 95 %, vorzugsweise 40 % bis 90 %, besonders bevorzugt 50 % bis 80 %, des Gesamtporenvolumens der Polymerpartikel durch Mikroporenporen mit Porendurchmessern von ≤ 20 Å gebildet. Insbesondere liegt das durch Mikroporen mit Porendurchmessern von ≤ 20 Å gebildete Mikroporenvolumen der Polymerpartikel im Bereich von 0,01 bis 1,5 cm³/g, insbesondere 0,02 bis 1,2 cm³/g, bevorzugt 0,05 bis 1 cm³/g. Die vorgenannten Angaben des Mikroporenvolumens werden insbesondere nach der Bestimmungsmethode gemäß Carbon Black bestimmt.

Die Bestimmungsmethode nach Carbon Black ist dem Fachmann an sich bekannt, so dass es diesbezüglich keiner weitergehenden Einzelheiten bedarf. Zudem kann zu weitergehenden Einzelheiten der Bestimmung der Porenoberfläche und des Porenvolumens nach Carbon Black beispielsweise verwiesen werden auf R. W. Magee, Evaluation of the External Surface Area of Carbon Black by Nitrogen Adsorption, Presented at the Meeting of the Rubber Division of the American Chem. Soc., Oktober 1994, z. B. referiert in: Quantachrome Instruments, AUTOSORB-1, AS1 WinVersion 1.50, Operating Manual, OM, 05061, Quantachrome Instruments 2004, Florida, USA, Seiten 71 ff.

Was den mittleren Porendurchmesser der erfindungsgemäß eingesetzten Polymerpartikel anbelangt, so kann auch dieser in weiten Bereichen variieren. Üblicherweise beträgt der mittlere Porendurchmesser der Polymerpartikel höchstens 100 Å, insbesondere höchstens 50 Å, bevorzugt höchstens 30 Å. Im Allgemeinen liegt der mittlere Porendurchmesser der Polymerpartikel im Bereich von 1 bis 100 Å, insbesondere 2 bis 75 Å, vorzugsweise 5 bis 50 Å, besonders bevorzugt 10 bis 30 Å.

Des Weiteren kann auch die innere Oberfläche (BET-Oberfläche) der erfindungsgemäß eingesetzten Polymerpartikel in weiten Bereichen variieren. Im Allgemeinen beträgt die BET-Oberfläche der Polymerpartikel mindestens 100 m²/g, insbesondere mindestens 200 m²/g, vorzugsweise mindestens 250 m²/g, bevorzugt mindestens 300 m²/g, besonders bevorzugt mindestens 400 m²/g. Üblicherweise beträgt die BET-Oberfläche der Polymerpartikel bis zu 1.800 m²/g, insbesondere bis zu 2.000 m²/g, vorzugsweise bis zu 2.500 m²/g, besonders bevorzugt bis zu 3.000 m²/g, ganz besonders bevorzugt bis zu 6.000 m²/g, noch mehr bevorzugt bis zu 7.000 m²/g und mehr. Insbesondere liegt die BET-Oberfläche der Polymerpartikel im Bereich von 100 m²/g bis 7.000 m²/g, insbesondere 150 bis 6.000 m²/g, vorzugsweise 200 bis 3.000 m²/g, besonders bevorzugt 225 bis 2.500 m²/g, ganz besonders bevorzugt 250 bis 2.000 m²/g, noch mehr bevorzugt 275 bis 1.800 m²/g.

Die Bestimmung der spezifischen Oberfläche gemäß BET ist dem Fachmann grundsätzlich als solche wohlbekannt, so dass es diesbezüglich keiner weitergehenden Einzelheiten bedarf. Alle BET-Oberflächenangaben beziehen sich auf die Bestimmung gemäß ASTM D6556-04. Im Rahmen der vorliegenden Erfindung wird im übrigen zur Bestimmung der BET-Oberfläche die dem Fachmann hinlänglich bekannte so genannte MultiPoint-BET-Bestimmungsmethode (MP-BET), insbesondere in einem Partialdruckbereich p/p₀ von 0,05 bis 0,1, angewendet.

In Bezug auf weitergehende Einzelheiten zur Bestimmung der BET-Oberfläche bzw. zu der BET-Methode kann im übrigen auf die vorgenannte ASTM D6556-04 sowie auf Römpp Chemielexikon, 10. Auflage, Georg Thieme Verlag, Stuttgart/New York, Stichwort: "BET-Methode", einschließlich der dort referierten Literatur, und auf Winnacker-Küchler (3. Auflage), Band 7, Seiten 93 ff. sowie auf Z. Anal. Chem. 238, Seiten 187 bis 193 (1968) verwiesen werden.

Auch das gewichts- und volumenbezogene Volumen V_{ads} (N₂) der erfindungsgemäß eingesetzten organischen Polymere bei unterschiedlichen Partialdrücken p/p₀ kann in weiten Bereichen variieren:

So kann das gewichtsbezogene adsorbierte N₂-Volumen V_{ads (gew)} der erfindungsgemäß eingesetzten organischen Polymere, bestimmt bei einem Partialdruck p/p₀ von 0,25, mindestens 50 cm³/g, insbesondere mindestens 100 cm³/g, bevorzugt mindestens 150 cm³/g, besonders bevorzugt mindestens 200 cm³/g, und liegt insbesondere im Bereich von 50 bis 800 cm³/g, vorzugsweise 100 bis 750 cm³/g, besonders bevorzugt 150 bis 700 cm³/g.

Im allgemeinen beträgt das volumenbezogene adsorbierte N₂-Volumen V_{ads (vol.)} der erfindungsgemäß eingesetzten organischen Polymere, bestimmt bei einem Partialdruck p/p₀ von 0,25, mindestens 50 cm³/cm³, insbesondere mindestens 100 cm³/cm³, und liegt insbesondere im Bereich von 50 bis 400 cm³/cm³, vorzugsweise 75 bis 375 cm³/cm³, besonders bevorzugt 100 bis 350 cm³/cm³.

Im allgemeinen beträgt das gewichtsbezogene adsorbierte N₂-Volumen V_{ads (gew.)} der erfindungsgemäß eingesetzten organischen Polymere, bestimmt bei einem Partialdruck p/p₀ von 0,995, mindestens 75 cm³/g, insbesondere mindestens 150 cm³/g, bevorzugt mindestens 200 cm³/g, besonders bevorzugt mindestens 225 cm³/g, und liegt insbesondere im Bereich von 75 bis 900 cm³/g, vorzugsweise 150 bis 800 cm³/g, besonders bevorzugt 175 bis 750 cm³/g

Im allgemeinen beträgt das volumenbezogene adsorbierte N₂-Volumen V_{ads (vol.)} der erfindungsgemäß eingesetzten organischen Polymere, bestimmt bei einem Partialdruck p/p₀ von 0,995, mindestens 75 cm³/cm³, insbesondere mindestens 125 cm³/cm³, und liegt insbesondere im Bereich von 75 bis 500 cm³/cm³, vorzugsweise 100 bis 475 cm³/cm³, besonders bevorzugt 125 bis 400 cm³/cm³_{.}

Gemäß einer besonderen Ausführungsform der vorliegenden Erfindung können die organischen Polymere bzw. die organischen Polymerpartikel nach erfolgter Poly(acetylcyclotrimerisierung) modifiziert werden, insbesondere mittels Nachvernetzung der Polymere (z. B. mittels Friedel-Crafts-Alkylierung etc.) und/oder mittels Funktionalisierung, bevorzugt an den Aromaten oder Polycyclen (z. B. Nitrierung der Aromaten mit nachfolgender Reduktion zum Amin oder mit nachfolgender Azo-Kupplung etc.) und/oder an gegebenenfalls noch vorhandenen, insbesondere endständigen Acetylgruppen (z. B. Reduktion der Carbonylgruppen). Auf diese Weise lassen sich verbesserte bzw. maßgeschneiderte Anwendungseigenschaften erhalten. Beispielsweise können die organischen Polymere bzw. die organischen Polymerpartikel nach erfolgter Poly(acetylcyclotrimerisierung) zu diesem Zweck einer Nachvernetzung bzw. einem so genannten Hypercrosslinking, bevorzugt mittels Friedel-Crafts-Alkylierung, unterworfen werden (z. B. durch vorangehendes Vorquellen der Polymere mit einem geeigneten Lösemittel, wie z. B. Dichlorethan, gefolgt von der eigentlichen Friedel-Crafts-Alkylierung, z. B. mit CH₂(OCH₃)₂ in Gegenwart eines geeigneten Katalysators, wie z. B. FeCl₃); auf diese Weise lassen sich beispielsweise die spezifischen Oberflächen der Polymere signifikant erhöhen, wobei dieser Vorgang auch wiederholt durchgeführt werden kann. Gleichermaßen ist es aber auch möglich, die organischen Polymere bzw. die organischen Polymerpartikel nach erfolgter Poly(acetylcyclotrimerisierung) einer Funktionalisierung zu unterziehen, z. B. an den Aromaten oder Polycyclen (z. B. Nitrierung der Aromaten mit nachfolgender Reduktion zum Amin oder aber mit nachfolgender Azo-Kupplung etc.) und/oder an gegebenenfalls noch vorhandenen, insbesondere endständigen Acetylgruppen (z. B. Reduktion der Carbonylgruppen). Es können aber auch zwei oder mehrere der vorgenannten Modifizierungen der Polymere durchgeführt werden. Insgesamt werden auf diese Weise modifizierte, insbesondere angepasste und/oder maßgeschneiderte Anwendungseigenschaften der erfindungsgemäß eingesetzten Polymere erhalten.

Weiterhin weisen die erfindungsgemäß eingesetzten Polymerpartikel gute Gasspeicher- und/oder Gasladungskapazitäten auf, insbesondere gegenüber Wasserstoff, Kohlenwasserstoffen, wie z. B. Methan, und dergleichen. Insbesondere weisen die erfindungsgemäß eingesetzten Polymerpartikel bei einem Druck von 1 bar und einer Temperatur von 77 K eine Wasserstoffspeicher- und/oder Wasserstoffbeladungskapazität von 0,1 bis 50 Gew.-%, insbesondere 0,2 bis 30 Gew.-%, vorzugsweise 0,5 bis 25 Gew.-%, bezogen auf die Polymerpartikel, auf.

Gemäß einer besonderen Ausführungsform der vorliegenden Erfindung können in der Einheit nach der vorliegenden Erfindung die erfindungsgemäß eingesetzten, porösen, organischen Polymerpartikel zusammen mit einem weiteren, aber hiervon verschiedenen partikulären porösen Material, insbesondere Adsorbens, eingesetzt bzw. hiermit kombiniert werden. Bei diesem weiteren Material kann es sich insbesondere um ein Material aus der Gruppe von Aktivkohle, insbesondere kornförmiger Aktivkohle, vorzugsweise kugelförmiger Aktivkohle; Zeolithen; porösen Metalloxid- und/oder Metallpartikeln; Ionenaustauscherharzen; anorganischen Oxiden, insbesondere Siliziumdioxiden, Silicagelen und/oder Aluminiumoxiden; porösen organisch-anorganischen Hybridpolymeren; metallorganischen Gerüstmaterialien, insbesondere MOFs (*Metall Organic Frameworks);* mineralischen Granulaten; Klathraten; sowie deren Mischungen und/oder Kombinationen, handeln. Besonders bevorzugt kann das weitere Material Aktivkohle, insbesondere in Kornform, vorzugsweise in Kugelform, besonders bevorzugt mit Teilchendurchmessern im Bereich von 0,0001 bis 5 mm, insbesondere 0,001 bis 2 mm, sein. Auf diese Weise kann die Leistungsfähigkeit der erfindungsgemäßen Einheit noch weiter gesteigert werden, da auf diese Weise Materialien mit unterschiedlichen Eigenschaften-erfindungsgemäß eingesetzte organische Polymerpartikel einerseits und Partikel des weiteren Materials andererseits - in einer einzigen Einheit miteinander vereint werden.

Im Rahmen der vorliegenden Erfindung wird also eine neue Klasse poröser, insbesondere mikroporöser, rein organischer Netzwerkverbindungen auf OFC-Basis bereitgestellt, welche über eine Polycyclotrimerisierungsreaktion von polyfunktionellen Acetylverbindungen synthetisiert werden und große spezifische BET-Oberflächen aufweisen und zudem eine stark hydrophobe Oberfläche besitzen, was sie insbesondere zur Adsorption bevorzugt unpolarer Stoffe interessant macht. Diese amorphen, porösen polymeren Materialien bzw. Partikel sind thermisch bis zu Temperaturen von etwa 300 °C und sogar mehr stabil und zeigen keine Zersetzungserscheinungen in wässriger Umgebung, was eine leichte Handhabung ermöglicht. Die OFCs sind synthetisch einfach zugänglich und bieten durch ihre chemische und thermische Stabilität vielseitige Anwendungsmöglichkeiten, beispielsweise bei adsorptiven Trennprozessen (z. B. in der Filtration, Gasreinigung, Gasspeicherung etc.).

Die zuvor beschriebene Polycyclotrimerisierung führt zur Verknüpfung von polyfunktionellen organischen Linkermolekülen bzw. Eduktmolekülen, so dass kovalente organische Netzwerke unter Abspaltung von Wassermolekülen gewonnen werden. Die Cyclotrimerisierungsreaktion von acetylierten aromatischen Verbindungen wird in der Literatur bislang nur zur Synthese von relativ kleinen Molekülen verwendet, deren Zentrum ein 1,3,5-substituierter Phenylenring darstellt, nicht aber zum Aufbau von porösen Polymernetzwerken. Die durch die Cyclotrimerisierung erreichte trigonale Symmetrie ist gerade für den Aufbau neuer Linkermoleküle, insbesondere für neuartige, modular aufgebaute poröse Polymere, von Bedeutung. Die Reaktion verläuft säurekatalysiert und kann beispielsweise - in Abhängigkeit von den Edukten - z. B. mit Kaliumpyrosulfat und katalytischen Mengen konzentrierter Schwefelsäure in einer Festkörperreaktion oder aber z. B. mit Lewis-Säuren, wie beispielsweise FeCl₃, AlCl₃, TiCl₄, TiCl₃(OTf) etc., in Lösung oder mit *in-situ*-erzeugtem Chlorwasserstoff aus der Hydrolyse von SiCl₄ mit Ethanol durchgeführt werden.

Weitere Vorteile, Merkmale, Eigenschaften und Aspekte der vorliegenden Erfindung ergeben sich auch aus den beigefügten Figurendarstellungen. Es zeigt:
- Fig. 1A bis 1C: erfindungsgemäß einsetzbare Ausgangsverbindungen bzw. Eduktmoleküle ("Linker") für die Herstellung der in der erfindungsgemäßen Einheit einsetzbaren, porösen organischen Polymere, wobei in den in Fig. 1A bis 1C dargestellten Formeln der Rest "Ac" eine Acetylgruppe CH₃-C(O)- bezeichnet und der Rest "R", jeweils unabhängig (d. h. somit auch möglich mit verschiedenen Bedeutungen innerhalb desselben Moleküls), Wasserstoff oder einen organischen Rest, insbesondere ausgewählt aus der Gruppe von Alkyl, Alkenyl, Alkinyl, Alkoxy und Aryl, einem Halogen oder einer Amingruppe, bezeichnet, wobei Fig. 1A bifunktionelle Linkermoleküle zeigt, während Fig. 1B bzw. 1C trifunktionelle bzw. tetrafunktionelle Linkermoleküle zeigen;
- Fig. 2A bis 2C: schematisch den Reaktionsablauf für die Herstellung der in den Ausführungsbeispielen näher charakterisierten OFC-Materialien OFC-1 und OFC-2 (vgl. Fig. 2A), OFC-3 (vgl. Fig. 2B) sowie OFC-4 (Fig. 2B), wobei dort das Symbol "*" jeweils die Wiederholungseinheiten andeutet;
- Fig. 3: die N₂-Physisorption der in den Ausführungsbeispielen näher charakterisierten OFC-Materialien OFC-1 (Raute), OFC-2 (Quadrat), OFC-3 (Dreieck) und OFC-4 (Kreis) bei 77 K, wobei volle Symbole die Adsorption und leere Symbole die Desorption betreffen und die Innengrafik (Inset) die Vergrößerung für OFC-3 und OFC-4 betrifft;
- Fig. 4: die H₂-Physisorption des in den Ausführungsbeispielen näher charakterisierten OFC-Materials OFC-1 bei 77 K;
- Fig. 5: die H₂O-Physisorption der in den Ausführungsbeispielen näher charakterisierten OFC-Materialien OFC-1 (Raute) und OFC-2 (Dreieck) bei 298 K, wobei volle Symbole die Adsorption und leere Symbole die Desorption betreffen;
- Fig.6: die mittels DTA/TG (Differenzialthermoanalyse/Thermogravimetrie) erhaltenen Kurven für das in den Ausführungsbeispielen näher charakterisierte OFC-Material OFC-1 an Luft;
- Fig. 7: REM-Aufnahmen der in den Ausführungsbeispielen näher charakterisierten OFC-Materialien OFC-1 (oben) und OFC-2 (unten) bei 500- und 20.000-facher Vergrößerung (links und rechts);
- Fig. 8: das FT-IR-Spektrum der in den Ausführungsbeispielen näher charakterisierten OFC-Materialien OFC-1 (oben) und OFC-2 (unten);
- Fig. 9: die Physisorptionsisothermen bei 77 K der in den Ausführungsbeispielen näher charakterisierten OFC-Materialien OFC-1A (Raute) und OFC-1B (Quadrate), wobei volle Symbole die Adsorption und leere Symbole die Desorption betreffen und die Innengrafik (Inset) die logarithmische Auftragung des Tiefdruckbereichs zeigt;
- Fig. 10: die mittels QSDFT-Methode bestimmte Porengrößenverteilung der in den Ausführungsbeispielen näher charakterisierten OFC-Materialien OFC-1A (Raute) und OFC-1B (Quadrate).

Die Einheit, wie sie zuvor beschrieben wurde, eignet sich für die Filtration, für die Gasreinigung, für die Katalyse, für die Gasspeicherung oder aber für die Sorption, insbesondere Adsorption, vorzugsweise von Gasen.

In diesem Zusammenhang kann beispielsweise die Einheit für die Filtration fluider oder gasförmiger Medien, beispielsweise zu Zwecken der Entfernung von Schad-, Geruchs- oder Giftstoffen, eingesetzt werden. Weiterhin besteht die Möglichkeit, die Einheit für die Gasreinigung, insbesondere für die Reinigung von Luftströmen, einzusetzen. Aufgrund der Porosität der erfindungsgemäß eingesetzten Polymerpartikel ist die Einheit auch für die Katalyse, insbesondere die heterogene Katalyse, geeignet, beispielsweise als Trägermaterial für Katalysatoren, insbesondere geträgerte Katalysatorsysteme. Weiterhin kann die Einheit aufgrund der Porosität der erfindungsgemäß eingesetzten Polymerpartikel auch für die Gasspeicherung, beispielsweise für die Speicherung von Wasserstoff, Kohlenwasserstoffen, wie z. B. Methan, oder anderen Gasen, wie z. B. Stickstoff etc., eingesetzt werden. Weiterhin kann die Einheit auch für die Sorption, insbesondere Adsorption, vorzugsweise von Gasen, eingesetzt werden (z. B. für die adsorptive Trennung oder Abtrennung von Gasen oder Gasgemischen).

Die zuvor beschriebene Einheit kann in Filtern und Filtermaterialien, insbesondere textilen Filtern und Filtermaterialien, in Gasreinigungsvorrichtungen, in Katalysatoren, in Gasspeichern oder in Schutzbekleidung, insbesondere ABC-Schutzbekleidung, Verwendung finden.

Die zuvor beschriebene Einheit eignet sich darüber hinaus zur Entfernung von Schad-, Geruchs- und Giftstoffen aller Art, insbesondere aus Luft- und/oder Gasströmen, vorzugsweise in ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich.

Schließlich können Filter und Filtermaterialien, insbesondere textile Filter und Filtermaterialien, Gasreinigungsvorrichtungen, Katalysatoren, Gasspeicher oder Schutzbekleidung, insbesondere ABC-Schutzbekleidung, unter Verwendung einer wie zuvor beschriebenen Einheit hergestellt sein bzw. eine wie zuvor beschriebene erfindungsgemäße Einheit aufweisen.

Weitere Ausgestaltungen, Abwandlungen und Variationen der vorliegenden Erfindung sind für den Fachmann beim Lesen der Beschreibung ohne weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung jedoch keinesfalls beschränken sollen.

### AUSFÜHRUNGSBEISPIELE:

### Allgemeines

Alle Chemikalien sind bei Sigma Aldrich, Acros Organics oder Alfa Aesar erhältlich und werden unverändert verwendet. Es werden nur getrocknete bzw. absolute Lösemittel verwendet, die unter Argonatmosphäre und über Molekularsieb aufbewahrt werden.

### Synthese von OFCs-1

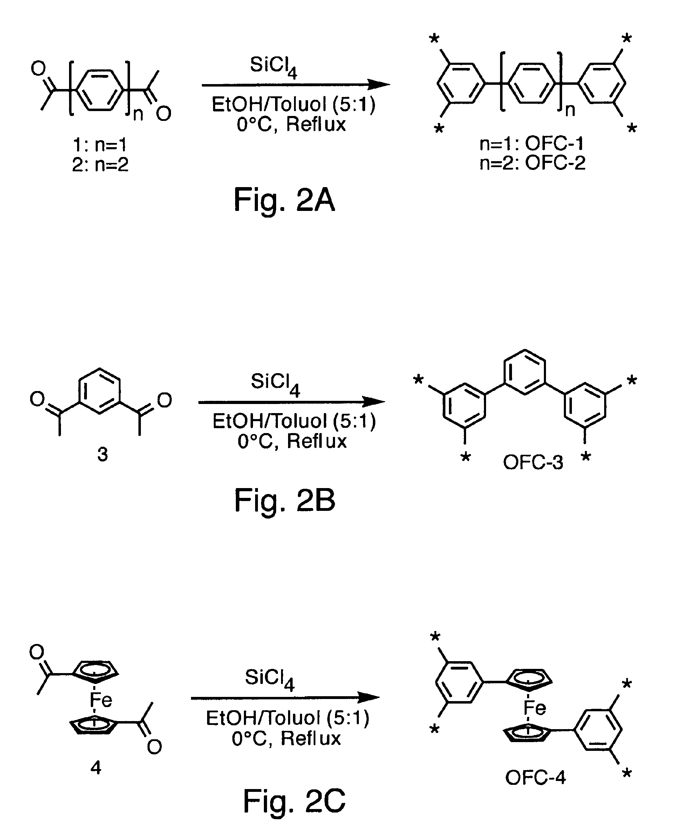

Unter dynamischer Argonatmosphäre werden in einem 250-ml-Dreihalskolben 0,4 g (2,46 mmol) 1,4-Diacetylbenzol vorgelegt und in 100 ml Ethanol und 20 ml Toluol gelöst. Bei einer Temperatur von 0 °C werden 28,2 ml (246 mmol) Siliziumtetrachlorid tropfenweise zugegeben. Nach 30 min rühren wird das Gemisch langsam erwärmt und bei etwa 110 °C für vier Stunden unter Rückfluss gekocht. Die Reaktion wird durch Zugabe von gesättigter Ammoniumchloridlösung beendet. Der entstandene Niederschlag wird abgesaugt und mit Wasser, konzentrierter Natronlauge, Wasser (bis ein pH-Wert von 7 erreicht ist) und Ethanol je dreimal gewaschen. Das Produkt wird unter Vakuum getrocknet. Die Reaktion ist schematisch in Fig. 2A dargestellt (n = 1), wobei dort das Symbol "*" die Wiederholungseinheiten andeutet.

### Synthese von OFC-2

Unter dynamischer Argonatmosphäre werden in einem 100-ml-Dreihalskolben 0,2 g (0,84 mmol) 4,4'-Diacetylbiphenyl vorgelegt und in 40 ml Ethanol und 8 ml Toluol suspendiert. Bei einer Temperatur von 0 °C werden 9,6 ml (84 mmol) Siliziumtetrachlorid tropfenweise zugegeben, wobei sich das Edukt löst. Nach 30 min rühren wird das Gemisch langsam erwärmt und bei etwa 110 °C für vier Stunden unter Rückfluss gekocht. Die Reaktion wird durch Zugabe von gesättigter Ammoniumchloridlösung beendet. Der entstandene Niederschlag wird abgesaugt und mit Wasser, konzentrierter Natronlauge, Wasser (bis ein pH-Wert von 7 erreicht ist), Aceton und Ethanol je dreimal gewaschen. Das Produkt wird unter Vakuum getrocknet. Die Reaktion ist schematisch in Fig. 2A dargestellt (n = 2), wobei dort das Symbol "*" die Wiederholungseinheiten andeutet.

### Synthese von OFC-3

Unter dynamischer Argonatmosphäre werden in einem 100-ml-Dreihalskolben 0,2 g (1,23 mmol) 1,3-Diacetylbenzol vorgelegt und in 40 ml Ethanol und 8 ml Toluol gelöst. Bei einer Temperatur von 0 °C werden 14,1 ml (123 mmol) Siliziumtetrachlorid tropfenweise zugegeben. Nach 40 min Rühren wird das Gemisch langsam erwärmt und bei etwa 110 °C für zwei Stunden unter Rückfluss gekocht. Die Reaktion wird durch Zugabe von gesättigter Ammoniumchloridlösung beendet. Der entstandene Niederschlag wird abgesaugt und mit Wasser, konzentrierter Natronlauge, Wasser (bis ein pH-Wert von 7 erreicht ist) und Ethanol je dreimal gewaschen. Das Produkt wird unter Vakuum getrocknet. Die Reaktion ist schematisch in Fig. 2B dargestellt, wobei dort das Symbol "*" die Wiederholungseinheiten andeutet.

### Synthese von OFC-4

Unter dynamischer Argonatmosphäre werden in einem 100-ml-Dreihalskolben 0,2 g (0,74 mmol) 1,1'-Diacetylferrocen vorgelegt und in 40 ml Ethanol und 8 ml Toluol gelöst. Bei einer Temperatur von 0 °C werden 8,5 ml (74,0 mmol) Siliziumtetrachlorid tropfenweise zugegeben. Nach 20 min Rühren wird das Gemisch langsam erwärmt und bei etwa 110 °C für 24 h unter Rückfluss gekocht. Die Reaktion wird durch Zugabe von gesättigter Ammoniumchloridlösung beendet. Der entstandene Niederschlag wird abgesaugt und mit Wasser und Ethanol je dreimal gewaschen. Das Produkt wird unter Vakuum getrocknet. Die Reaktion ist schematisch in Fig. 2C dargestellt, wobei dort das Symbol "*" die Wiederholungseinheiten andeutet.

### Charakterisierung

Die Stickstoffphysisorption wurde an NOVA 2000 und AUTOSORB 1-C bei 77 K gemessen. Die Wasserstoffphysisorption wurde ebenfalls an AUTOSORB 1-C bei 77 K und die Wasserdampfphysisorption an HYDROSORB 1000 bei 298 K durchgeführt. Alle genannten Adsorptionsgeräte stammen von der Firma Quantachrom. Jede Probe wurde direkt vor den Adsorptionsmessungen für mindestens fünf Stunden bei 150 °C unter Vakuum aktiviert.

FT-IR-Spektren wurden am FT-IR-Spektrometer Magna-IR 550 Series II der Firma Nicolet aufgenommen.

Elementaranalysen wurden als Verbrennungsanalysen am Institut für Organische Chemie der TU Dresden mit dem Gerät EA 3000 Euro Vector CHNSO Elementaranalysator der Firma Hekatech durchgeführt.

Die thermoanalytischen Messungen (DTA/TG bzw. Differenzialthermoanalyse/Thermogravimetrie) wurden am Institut für Anorganische Chemie an der Simultanen Thermoanalyseapparatur STA 409 der Firma Netzsch durchgeführt.

### Ergebnisse und Diskussion

Alle der in der Beschreibung genannten Varianten führen zur gewünschten Cyclotrimerisierung und zur Bildung eines unlöslichen Polymernetzwerks. Insbesondere die Reaktion mit einem Katalysatorsystem auf Basis von Siliziumtetrachlorid in Ethanol führt zu besonders guten Ergebnissen. In allen Fällen entstehen poröse, insbesondere hochmikroporöse Polymernetzwerke, die im Gegensatz zu anderen, bekannten Netzwerken des Standes der Technik keine geordnete Struktur aufweisen. Der Grund hierfür liegt in dem kinetisch kontrollierten Reaktionsweg. Die aromatischen Phenylenringe entstehen unter Abspaltung von Wassermolekülen, was unter den gegebenen Reaktionsbedingungen keine thermodynamisch kontrollierte Gleichgewichtsreaktion ist. Außerdem stellen Phenylenringe die stabilsten aromatischen Strukturen dar, die bekannt sind.

### Optimierung der Synthesebedingungen

Die Synthesebedingungen der neuen Materialien wurden anhand der Synthese von OFC-1 in Hinblick auf die Größe der spezifischen Oberfläche optimiert. Dazu wurde vor allem der Einfluss des Lösungsmittels, die Menge des zugegebenen SiCl₄ sowie die Abhängigkeit von der Synthesetemperatur untersucht.

### Charakterisierung der Porosität und Physisorptionseigenschaften

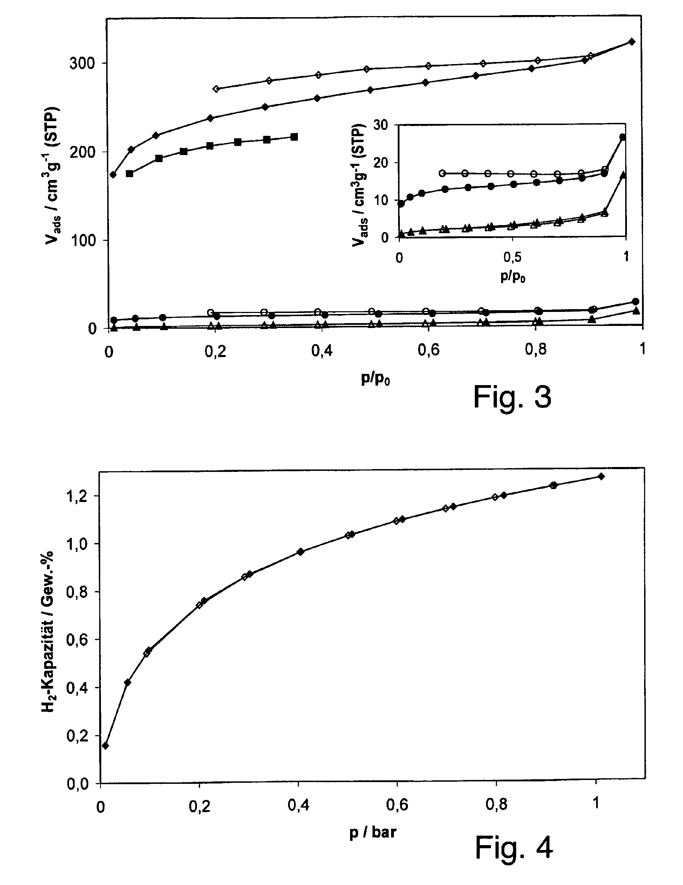

Zur Charakterisierung der Porosität wurde für alle Proben die Stickstoffphysisorption bei 77 K gemessen (vgl. Fig. 3). Fig. 3 zeigt die N₂-Physisorption von OFC-1 (Raute), OFC-2 (Quadrat), OFC-3 (Dreieck) und OFC-4 (Kreis) bei 77 K, wobei volle Symbole die Adsorption und leere Symbole die Desorption betreffen; die Innengrafik (Inset) betrifft die Vergrößerung für OFC-3 und OFC-4.

Alle Verbindungen (OFC-1 bis OFC-4) sind mikroporös. Es liegen Isothermen als Mischung von Typ I und II nach der IUPAC-Klassifizierung vor. Nach der Adsorption in den Mikroporen bei sehr kleinem Relativdruck zeigen die Isothermen einen kontinuierlichen Anstieg, was auf die Adsorption an der äußeren Oberfläche sehr kleiner Partikel zurückzuführen ist. Der leichte Anstieg bei einem Relativdruck p/p₀ > 0,9 deutet auf Stickstoffkondensation in Makroporen bzw. in interpartikulären Zwischenräumen hin. Über den gesamten Relativdruckbereich bildet die Desorption eine Hysterese aus. Dieser Effekt ist für ungeordnete poröse Polymere charakteristisch und wird auf ein dynamisches Verhalten der Verbindungen, welches sich in einem Aufquellen des Netzwerks durch kondensiertes Adsorbat bemerkbar macht, zurückgeführt. Die Isothermen wurden nach der BET-Theorie und der t-Plot-Mikroporenanalyse (vgl. Tab. 1) ausgewertet.

**Tab. 1: Spezifische Oberfläche, externe Oberfläche und Mikroporenvolumen aus der Stickstoffphysisorption bei 77 K**

| | S_{SPBET}(p/p₀=0.3) / m²g⁻¹ | Sₑₓₜₑᵣₙ(t-Plot) / m²g⁻¹ | Vₘᵢₖᵣₒ(t-Plot) / cm³g⁻¹ (p/p₀=0,2) |
|---|---|---|---|
| OFC-1 | 772 | 63 | 0,38 |
| OFC-2 | 650 | 72 | 0,32 |

Es wird eine gute Wasserstoffspeicherkapazität beobachtet. Für OFC-1 wurde die Wasserstoffphysisorption bei 77 K gemessen (vgl. Fig. 4, welche die H₂-Physisorption von OFC-1 bei 77 K zeigt). Die Verbindung besitzt eine Wasserstoffspeicherkapazität von 1,26 Gew.-% bei einem Druck von 1 bar, wobei noch keine Sättigung erreicht wird, so dass eine noch höhere Kapazität bei höherem Druck erreicht werden kann.

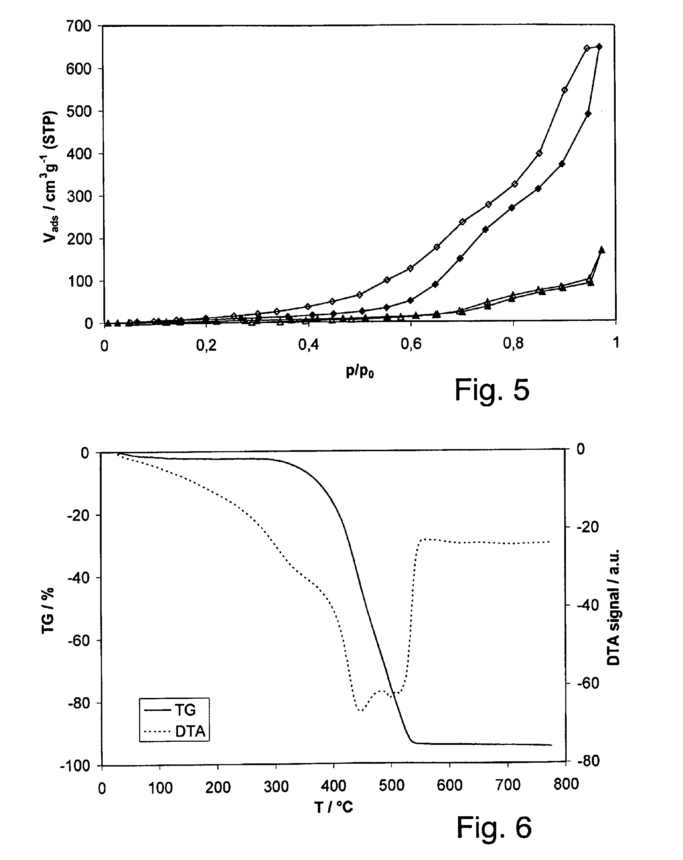

Da die Netzwerke in erster Näherung ausschließlich aus aromatischen 1,4- und 1,3,5-substituierten Phenylenringen aufgebaut sind, weisen sie eine extrem unpolare Oberfläche auf. Mittels Wasserdampfphysisorption bei 298 K wurde dieses Verhalten für OFC-1 und OFC-2 bestätigt (vgl. Fig. 5, welche die H₂O-Physisorption von OFC-1 (Raute) und OFC-2 (Dreieck) bei 298 K veranschaulicht, wobei volle Symbole die Adsorption und leere Symbole die Desorption betreffen). Bei kleinem Relativdruck findet keine Adsorption statt. Erst ab p/p₀ = 0,6 für OFC-1 und p/p₀ = 0,7 für OFC-2 wird Wasserdampf in den Poren adsorbiert. Die vollständige Desorption des Wassers und die Tatsache, dass die Verbindungen schon bei der Aufarbeitung mit Wasser gewaschen wurden, deuten auf eine sehr gute Hydrolysebeständigkeit hin. Nach der genannten Adsorption bei mittlerem Relativdruck ist ein weiterer Adsorptionsschritt bei sehr hohem Relativdruck zu erkennen, der auf die Kondensation von Wasser in der Messzelle hindeutet. Zum Vergleich mit den Mikroporenvolumina aus der N₂-Physisorption (vgl. Tab. 2) wurde das Porenvolumen aus der Menge des adsorbierten Wasser vor der Kondensation in der Messzelle bei p/p₀ = 0,85 bestimmt.

**Tab. 2 Vergleich der Porenvolumina aus N₂- und H₂O-Physisorption**

| | OFC-1 | OFC-2 |
|---|---|---|
| Vₘᵢₖᵣₒ(N₂) / cm³g⁻¹ | 0,38 | 0,32 |
| V_{ges}(H₂O) / cm³g⁻¹ | 0,25 | 0,06 |

Das aus der Gesamtmenge adsorbierter Wassermoleküle berechnete Porenvolumen ist im Fall von OFC-1 um 34 % und im Fall von OFC-2 sogar 81 % geringer als das aus der Stickstoffphysisorption bestimmte Mikroporenvolumen, was ein weiterer Hinweis auf eine extrem hydrophobe innere Oberfläche, insbesondere im Fall von OFC-2, ist. Das Wasser wird vorzugsweise an wenig vorhandenen, polareren Zentren auf der Oberfläche adsorbiert, wodurch die polare "Oberfläche" durch wachsende Wassermolekülansammlungen zunimmt. Durch dieses Wachstum wird die unpolare Oberfläche überbrückt ("bridging effect"), bis es schließlich zur Kondensation im Inneren der Poren kommt. Der verbleibende freie Porenraum direkt über der unpolaren Oberfläche führt zu dem geringeren Porenvolumen im Gegensatz zu den vollständig mit Stickstoffmolekülen gefüllten Poren.

### Charakterisierung der Zusammensetzung und Struktur

Die Verbindung OFC-1 wurde in Hinblick auf ihre thermische Stabilität mittels DTA/TG untersucht (vgl. Fig. 6). Eine Zersetzung ist ab einer Temperatur von 300 °C zu beobachten. Das DTA-Signal zeigt mehrere Maxima bei 450 °C und im Bereich um 500 °C. Die erste Zersetzungsstufe wird auf die Verbrennung von organischen Gruppen zurückgeführt, die nicht verknüpfend in das Netzwerk eingebaut sind und den Porenraum teilweise durchdringen, z. B. nur einseitig cyclotrimerisiertes Diacetylbenzol. Bei der zweiten Stufe wird dann die gerüstbildende Organik zersetzt. Theoretisch wäre eine vollständige Verbrennung der Verbindung zu erwarten, jedoch bleibt ein Rest von ca. 5,3 Gew.-% übrig. Dieser Rückstand ist vermutlich auf SiO₂ zurückzuführen, das beim Reaktionsabbruch mit wässriger Ammoniumchloridlösung in Form von Kieselsäure entstanden ist und beim Waschen mit Natronlauge nicht vollständig aus dem Netzwerk entfernt werden konnte.

Mit EDX-Untersuchungen von OFC-1 und OFC-2 (vgl. Tab. 3) konnte gezeigt werden, dass die Gewichtsanteile von Kohlenstoff in beiden Verbindungen gut mit den theoretisch berechneten übereinstimmen. Neben dem Kohlenstoff als Hauptbestandteil der Netzwerke konnten Sauerstoff aus dem bereits erwähnten SiO₂ bzw. aus nichtumgesetzten Acetylgruppen und Stickstoff aus nicht vollständig ausgewaschenem Ammoniumchlorid nachgewiesen werden. In OFC-1 wurden außerdem noch Spuren von Natrium entdeckt, die auf Reste von NaOH schließen lassen, während in OFC-2 sehr geringe Mengen Silizium nachgewiesen wurden.

**Tab. 3: Ergebnisse der EDX-Analyse von OFC-1 und OFC-2; N wurde nicht direkt detektiert (Werte: gemessen / theoretisch)**

| OFC-1 | | | OFC-2 | | |
|---|---|---|---|---|---|
| Element | Atom-% | Gew-% | Element | Atom-% | Gew-% |
| C | 97,08 / 62,50 | 96,45 / 95,20 | C | 97,65 / 61,54 | 96,95 / 95,02 |
| O | 0,63 / - | 0,83 / - | O | 0,80 / - | 1,06/- |
| N | 2,22 / - | 2,58 / - | N | 1,56 / - | 1,81 / - |
| Na | 0,08 / - | 0,14 /- | Na | - | - |
| Si | - | - | Si | 0,08 / - | 0,18 / - |

Um genauere Aussagen über die Zusammensetzung der Verbindungen zu machen, wurden zudem Elementaranalysen in Form von Verbrennungsanalysen durchgeführt.

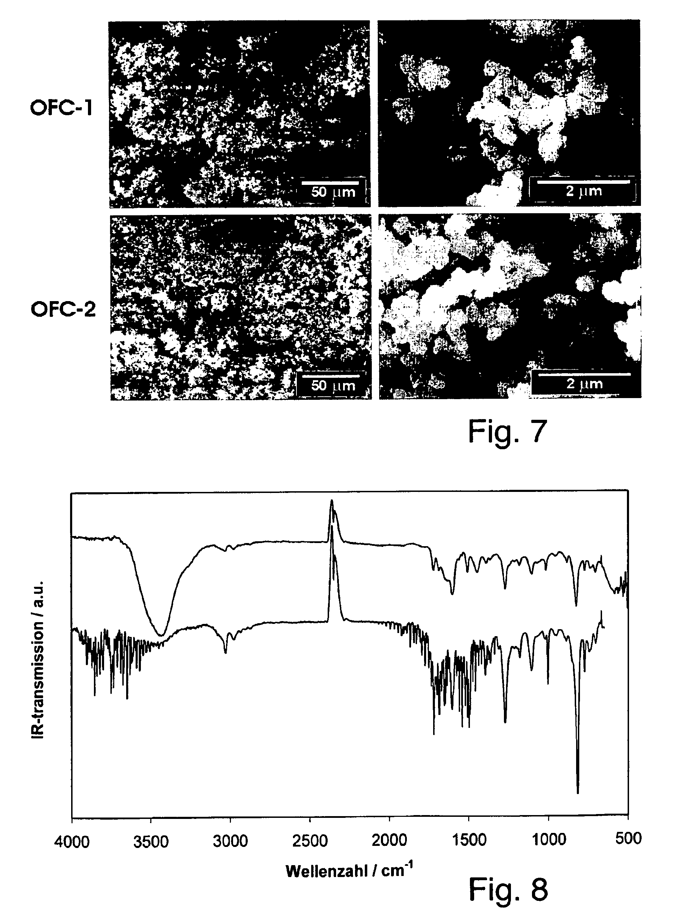

Rasterelektronenmikroskopische Aufnahmen der Pulverproben von OFC-1 und OFC-2 zeigen feine, teilweise aggregierte oder verwachsene Partikel (vgl. Fig. 7, welche REM-Aufnahmen von OFC-1 (oben) und OFC-2 (unten) bei 500- und 20.000-facher Vergrößerung (links und rechts) zeigt). Bei beiden Verbindungen kann bei 20.000-facher Vergrößerung die Größe einzelner Partikel näherungsweise bestimmt werden. Es ergibt sich ein Durchmesser von etwa 400 bis 500 nm für die stark aggregierten Partikel.

Um Aussagen zur Struktur von OFC-1 und OFC-2 machen zu können, wurde die Verbindung mittels FT-IR-Spektroskopie untersucht. In den FT-IR-Spektren (vgl. Fig. 8, welche das FT-IR-Spektrum von OFC-1 (oben) und OFC-2 (unten) zeigt) sind vor allem die Banden im Bereich 3.000 bis 3.050 cm⁻¹ von Bedeutung, die von C-H-Valenzschwingungen in aromatischen Ringen hervorgerufen werden, woraus die Polymere hauptsächlich aufgebaut sind. Im benachbarten Bereich von 2.940 bis 2.990 cm⁻¹ sind sehr schwache Banden zu erkennen, die auf aliphatische C-H-Valenzschwingungen deuten. Das ist ein weiterer Hinweis auf nicht umgesetzte Acetylgruppen, da diese aliphatische Methylgruppen enthalten. Die dazugehörige Schwingung der Carbonylgruppe (C=O) wird durch die Bande bei 1720 cm⁻¹ angezeigt. In beiden Spektren befindet sich bei ca. 820 cm⁻¹ eine sehr starke, schmale Bande, die für 1,3,5- und 1,4-substituierte Phenylenringe typisch ist. Anhand der Verteilung der Banden im Fingerprint-Bereich sind beide Substitutionsmuster identifizierbar.

### Verwendung von OFC-Materialien zur Herstellung von Gasspeichern

Die zuvor beschriebenen, porösen organischen OFC-Polymere vom Typ OFC-1, OFC-2, OFC-3 bzw. OFC-4 werden als Gasspeichermedium für Wasserstoff eingesetzt. Zu diesem Zweck werden sie an einen komprimierten dreidimensionalen Schaumstoffträger mittels eines Bindemittels fixiert, und der auf diese Weise erhaltene Verbund aus Schaumstoff mit hieran fixierten Polymeren wird in einen Gasspeichertank eingebracht. Alle Materialien weisen identische Auflagemengen an OFC-Material auf. In einem fünften Ansatz wird die Hälfte des OFC-Materials vom Typ OFC-1 durch eine mikroporöse Aktivkohle in Kugelform (mittlerer Durchmesser: 0,01 mm) von der Fa. AdsorTech GmbH, Premnitz, Deutschland, ersetzt. Anschließend wird die Wasserstoffspeicherkapazität bzw. Wasserstoffbeladungskapazität bei einem Druck von 3 bar bestimmt. Diese liegt bei dem Material, welches mit OFC-1 bzw. OFC-2 bzw. OFC-3 bzw. OFC-4 bzw. OFC-1/Aktivkohle beaufschlagt ist, bei 2,1 Gew.-% bzw. 2,4 Gew.-% bzw. 2,7 Gew.-% bzw. 2,6 Gew.-% bzw. 5,9 Gew.-%, bezogen jeweils auf die Gesamtmenge an Adsorbens bzw. Sorptionsmaterial (d. h. poröse Polymere bzw. poröse Polymere plus Aktivkohle). Die Werte beziehen sich auf Temperaturen von 77 K. Die Ergebnisse zeigen, dass die verschiedenen erfindungsgemäßen Einheiten gute Wasserstoffspeicher bzw. Wasserstoffbeladungseigenschaften aufweisen, welche durch Kombination mit einem weiteren Adsorbens (hier konkret: Aktivkohle) signifikant gesteigert werden können.

### Herstellung von textilen Flächenfiltermaterialien

Es werden fünf Sorptionsfiltermaterialien hergestellt, wobei als Trägermaterialien jeweils ein luftdurchlässiges textiles Flächenmaterial in Form eines oleophobierten und hydrophobierten Polyestergewebes mit einem Flächengewicht von ca. 70 g/m² dient. In allen vier Fällen werden partikuläre poröse Polymerpartikel vom Typ OFC-1 bzw. OFC-2 bzw. OFC-3 bzw. OFC-4 und im fünften Fall eine 50 : 50-Mischung von OFC-1/mikroporöse Aktivkohle (Kugelform, wie zuvor beschrieben) verwendet (Auflagemengen jeweils: ca. 35 Gew.-% in Bezug auf das Filtermaterial). Zu diesem Zweck werden die agglomerat-, korn- oder kugelförmigen Partikel mittels eines Klebstoffs (Auftragsmenge an Klebstoff jeweils ca. 5 g/m²) in punktrasterförmiger und gleichmäßiger Verteilung auf dem Trägermaterial fixiert. Alle OFC-Materialien wurden vorher mit einer Metallsalzimprägnierung (Cu/Zn/Ag-Imprägnierung mit ca. 3,9 Gew.-% Imprägnierung, bezogen auf Partikel) versehen.

An allen fünf Filtermaterialien werden die jeweiligen Barrierewirkungen gegenüber Senfgas und Soman gemäß Methode 2.2 der CRDEC-SP-84010 im Rahmen des so genannten konvektiven Strömungstests (*convective flow test*) bestimmt; zu diesem Zweck lässt man bei konstantem Strömungswiderstand mit einer Strömungsgeschwindigkeit von ca. 0,45 cm/s einen Senfgas bzw. Soman enthaltenden Luftstrom auf das jeweilige Filtermaterial einwirken und bestimmt die flächenbezogene Durchbruchmenge nach 16 Stunden (80 % relative Luftfeuchtigkeit; 32 °C; 10 • 1 µl HD/12,56 cm² bzw. 12 • 1 µl GD/12,56 cm²). Alle Materialien lieferten sowohl im Hinblick auf Senfgas als auch im Hinblick auf Soman Werte unterhalb von 2 µg/cm², wobei das Filtermaterial mit der Kombination von OFC-Material/Aktivkohle die besten Werte zeigte.

Alle Filtermaterialien zeigen im Übrigen Schutzwirkung gegenüber Mikroorganismen: Bei Versuchen zur Überprüfung der biostatischen Eigenschaften nach ASTM E2149-01 mit *Klebsiella pneumoniae* bzw. *Staphylococcus aureus* (jeweils 1,5 bis 3,0 • 10⁵ CFU/ml) liegt die prozentuale Reduktion in Bezug auf diese beiden Erreger nach 24 Stunden bei allen Materialien oberhalb von 90 %.

### Weitere Synthesen und Untersuchungen

Die Synthese des OFC-1 über zwei verschiedene Reaktionswege, zum Einen in ethanolischer Lösung mit SiCL₄ als Pulver (OFC-lA) und zum Anderen in einer Schmelze als Monolith (OFC-1B), wurde weiterhin untersucht, und die Produkte wurden charakterisiert.

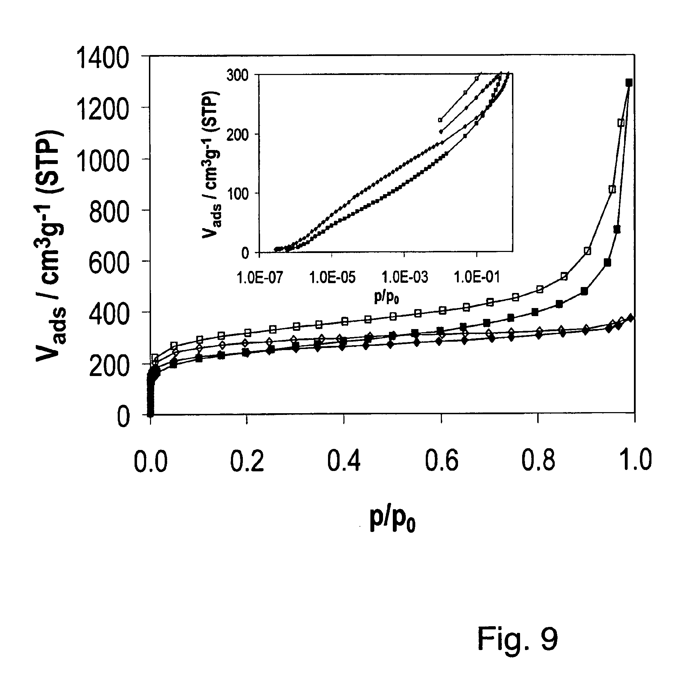

Interessante Ergebnisse zu OFC-1 konnten durch die Messung der N₂-Adsorption im Tiefdruckbereich erhalten werden (vgl. Fig. 9: Fig. 9 zeigt die Physisorptionsisothermen bei 77 K von OFC-1A (Raute) und OFC-1B (Quadrate), wobei volle Symbole die Adsorption und leere Symbole die Desorption betreffen und die Innengrafik (Inset) die logarithmische Auftragung des Tiefdruckbereichs zeigt). So weisen beide Verbindungen OFC-1A und OFC1B ähnliche spezifische Oberflächen von ca. 800 m²g⁻¹ (SPBET 0.3) und fast identische Mikroporenvolumina von 0.38 cm³g⁻¹ (p/p₀=0.2) auf. Allerdings unterscheiden sie sich sehr stark in der Adsorption bei hohem Relativdruck. Während das totale Porevolumen von OFC-lA bei p/p₀ = 0.99 lediglich 0.57 cm³g⁻¹ beträgt, weist OFC-1B einen hohen Anteil an Makroporen mit einem totalen Porenvolumen von 1.99 cm³g⁻¹ auf.

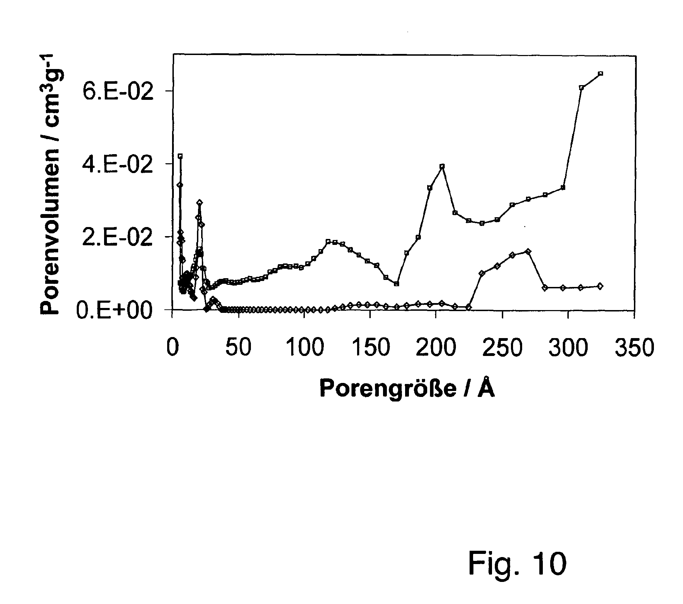

Diese Verteilung kann mittels QSDFT-Analyse der Tiefdruckmessung bestätigt werden (vgl. Fig. 10: Fig. 10 zeigt die mittels QSDFT-Methode bestimmte Porengrößenverteilung von OFC-1A (Raute) und OFC-1B (Quadrate)). OFC-1A zeigt eine breite Mikroporenverteilung und einen Anteil Mesoporen bei ca. 25 nm. Im Vergleich dazu besitzt OFC-1B eine viel breitere Verteilung über den gesamten Porengrößenbereich, welche ein gut ausgebildetes Transportporensystem indiziert. Beide Materialien zeigen einen auffälligen, relativ scharfen Peak bei 2 nm. Durch eine simulierte Dendrimerstruktur der Verbindung kann dieser Peak einer mittleren, netzwerkbedingten Porengröße zugeordnet werden, die sich durch Vermessung der Poren im Modell bestätigt.

### Imprägnierung von Nonwovens mit OFC-1

Eine Imprägnierung von Nonwovens mit OFC-1 wurde an verschiedenen Materialien getestet. Beste Ergebnisse wurden mit Polypropylenvliesen erzielt. Die Imprägnierung erfolgte mit einer ethanolischen Lösung der Edukte. Nach der Trocknung wurde das Vlies 96 h bei 120 °C behandelt und anschließend mittels Soxhlet-Extraktion von überschüssigen Edukten gereinigt. Es war eine Massezunahme von 85 % zu beobachten.

### Herstellung von OFC-1-Kugeln

Durch Suspensionspolymerisation können Kugeln von OFC-1 hergestellt werden. Dazu werden die festen Edukte 1,4-Diacetylbenzol und 4-Toluolsulfonsäure in einer inerten Flüssigkeit erhitzt und stark gerührt. Die entstehende Suspension einer Schmelze in einer Flüssigkeit führt zu kleinen Bläschen, die durch längeres Erhitzen polymerisieren. Die gebildeten Kugeln können durch Filtration abgetrennt und entsprechend durch Soxhlet-Extraktion gereinigt werden. Die besten Kugeln konnten aus Silikonöl als inertem Reaktionsmedium erhalten werden. Durch Waschen mit Lösemitteln kann überschüssiges Silikonöl nachfolgend wieder gelöst bzw. entfernt werden, so dass poröse Kugeln erhalten werden. Mit der Methode der Suspensionspolymerisation ist es also möglich, Polymerkugeln herzustellen.

### Weitergehende Untersuchungen:

Die Synthese der Verbindung OFC-1 wurde genauer untersucht, wobei in der nachfolgenden Reaktionsgleichung das Symbol "*" die Wiederholungseinheiten andeutet:

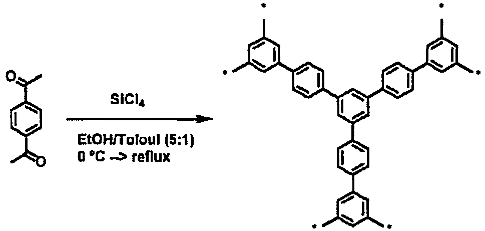

Die Reaktionslösung wird im Verlauf der SiCl₄-Zugabe immer dunkler, bis schließlich eine Dispersion schwarzer Partikel vorliegt. Wird anschließend unter Rückfluss gekocht, hellt sich der Niederschlag auf, bis schließlich ein orange-gelbes Produkt isoliert werden kann. Die Verdunklung der Lösung kann durch das Partikelwachstum eines Polymers mit konjugiertem π-System erklärt werden. Dabei wird durch wachsende Partikel und damit wachsendem π-System die resultierende Bandlücke immer kleiner (Größenquantisierungseffekt), so dass im Fall der schwarzen Zwischenstufe ein leitfähiges Produkt vorliegt. Der Wechsel vom schwarzen zum gelben Produkt ist reversibel und kann auf *in situ* gebildetes HCl zurückgeführt werden, das durch Erhitzen ausgetrieben wird. Bringt man das gelbe Produkt mit elektrophilen Substanzen, wie Säuren (H⁺), oder Salzen, wie z.B. FeCl₃ (Lewis-Säure), in Kontakt, färbt es sich sofort schwarz, wobei im Fall von Säuren der Effekt problemlos durch Waschen mit Wasser rückgängig gemacht werden kann. Die "Dotierung" des Polymers mit Elektrophilen entspricht der Dotierung von Halbleitern mit elektronenarmen Akzeptoren, was zu einer Verkleinerung der Bandlücke führt. Strukturell kann man im Polymer davon ausgehen, dass statt einer Cyclotrimerisierung als Konkurrenzreaktion nur eine Dimerisierung stattfindet, so dass eine Konjugation des π-Systems über sp²-hybridiserte C-Atome gegeben ist, jedoch eine Verringerung der Elektronendichte am Carbonyl-Kohlenstoffatom durch Elektrophile insgesamt zu einer Verkleinerung der Bandlücke führt. Wird das Polymer mit einer FeCl₃-Lösung in Dichlorethan behandelt, kann das erhaltene schwarze Produkt isoliert werden. Die Oberfläche hat sich von 780 m²/g auf ca. 360 m²/g verringert, was auf die Massezunahme und teilweise blockiertes Porenvolumen zurückzufiihren ist. Wird das Polymer zu einer festen Tablette gepresst, ist auch eine geringe Leitfähigkeit messbar.

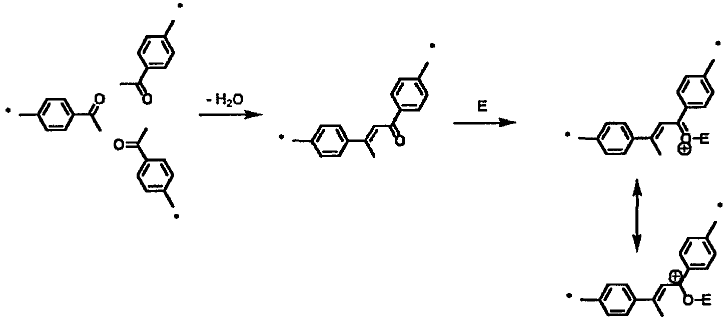

Der Nachweis der verschiedenen organischen Gruppen, die durch Cyclotrimerisierung und Dimerisierung entstehen konnten mittels FT-IR-Spektroskopie nachgewiesen werden. Eine starke Bande bei 827 cm⁻¹ zeigt das Vorhandensein von 1,4-substituierten Phenylenringen, die am häufigsten vorkommen, da sie das Edukt darstellen. Außerdem können durch die schwache Bande bei 709 cm⁻¹ 1,3,5-substituierte Ringe nachgewiesen werden, die durch die Cyclotrimerisierungsreaktion entstehen. Daneben sind aber auch Carbonylgruppen (1722 cm⁻¹) und Doppelbindungen (DB, 1687 cm⁻¹) auszumachen, wobei die Doppelbindungen nur auftreten, wenn eine Dimerisierung stattgefunden hat. Die Verbindung OFC-1 besteht aus stark aggregierten Partikeln von ca. 500 nm Durchmesser und ist an Luft thermisch bis etwa 300 °C stabil. Wie mittels UV/VIS-Absorptionsspektroskopie gezeigt werden konnte, absorbiert das gelbe OFC-1 im unteren visuellen Bereich mit einem Maximum im UV-Bereich bei einer Wellenlänge von ca. 270 nm. An Verbindungen auf organischer Basis und mit ähnlichen Absorptionseigenschaften wurde gezeigt, dass eine photokatalytische Aktivität vorhanden ist. OFC-1 wurde anhand der photokatalysierten Zersetzung von Methylrot in Lösung auf ähnliche Eigenschaften untersucht. Als Referenz wurde eine Methylrotlösung ohne OFC-1 verwendet. Anhand der UV-VIS-Spektren ist eine eindeutige photokatalytische Aktivität des Materials zu erkennen.

### Funktionalisierung von OFC-1

### Reduktion der Carbonylgruppen

Die Verbindung OFC-1 zeichnet sich durch eine moderate Hydrophobizität aus. Die teilweise vorhandenen Carbonylgruppen dienen aufgrund ihrer Polarität als erste Adsorptionsstellen für Wassermoleküle. Das wiederum führt zu einer beginnenden Wasseradsorption bei einem Relativdruck von 0,6 und entspricht damit ungefähr dem Adsorptionsverhalten von kommerziellen Aktivkohlen. Durch Reduktion der Carbonyl- zu Methylengruppen mittels der Wolff Kishner-Reduktion mit Hydrazin und der direkten Reduktion mit Wasserstoff sollte es möglich sein die innere Oberfläche stärker unpolar zu machen. Allerdings sollte damit auch die Konjugation des π-Systems teilweise unterbrochen werden, da die Carbonyl-Kohlenstoffatome ihre Hybridisierung von sp² zu sp³ ändern. Dieser Effekt ist nach der Reaktion nach Wolff-Kishner auch visuell zu beobachten, weil sich das Polymer deutlich aufhellt und nur noch eine schwach gelbe Färbung besitzt. Die spezifische Oberfläche ist auf 686 m²/g zurückgegangen. Die Reduktion mit Wasserstoff bei 200 °C führte zu einer minimalen Masseabnahme In beiden Fällen geht die gesamt adsorbierte Menge Wasser bei p/p₀ = 0,97 um ca. 40 % zurück, was auf eine stärker unpolare Oberfläche schließen lässt. Allerdings ist keine Verschiebung der Adsorption zu größerem Relativdruck zu bcobachten.

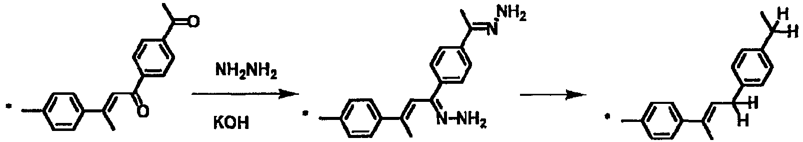

### Nitrierung mit Reduktion zum Amin

Weiterhin wurde die Verbindung OFC-1 anderweitig funktionalisiert. Mit Nitriersäure ist es gelungen, die aromatischen Ringe zumindest teilweise zu nitrieren. Die erfolgreiche Nitrierung konnte mittels IR-Spektroskopie nachgewiesen werden. Die Nitrogruppen auf der inneren Oberfläche von OFC-1 wurden anschließend reduziert, um Aminogruppen für eine weitere mögliche Funktionalisierung zu erhalten. Außerdem wurden die Nitrogruppen in den Poren genutzt, um über reduktive Azo-Kupplung eine stärkere Konjugation des π-Systems und eine stärkere Vernetzung zu erreichen. Die Bestätigung der Funktionalisierung erfolgte mittels IR-Spektroskopie.

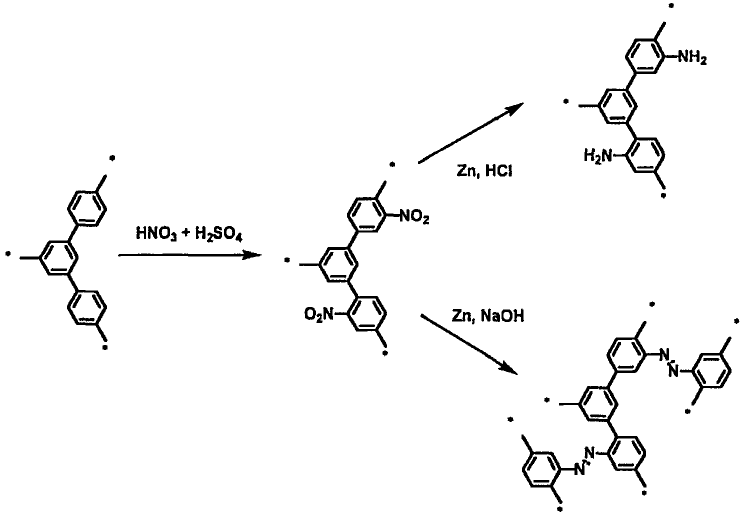

### Hypercrosslinking (Nachvernetzung)

Aufbauend auf das Prinzip der hochvernetzten porösen Polymere wurde die Verbindung OFC-1 in Dichlorethan gequollen und anschließend über eine Friedel-Crafts-Alkylierung vernetzt. Das gequollene Netzwerk wurde somit stabilisiert, und eine Vergrößerung der spezifischen Oberfläche von 772 auf 960 m²/g konnte beobachtet werden, wobei der Hysterese-Effekt in der N₂-Physisorptionsisotherme nicht verschwindet, sondern sich weiter vergrößert. Auch ist es möglich, durch eine zweite Quellung und Vernetzung die Oberfläche weiter zu erhöhen.

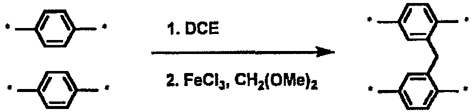

### Thermodynamische Untersuchungen

Des weiteren wurden thermodynamische Untersuchungen an einer Charge von OCF-1 durchgeführt, wie sie nachfolgend wiedergegeben sind:
Adsorbiertes N₂-Volumen V_{ads (gew.)} (p/p₀ = 0,25): 232 cm³/g
Adsorbiertes N₂-Volumen V_{ads (gew.)} (p/p₀ = 0,995): 356 cm³/g
Gesamtporenvolumen Gurvich: 0,5514 cm³/g
BET-Oberfläche (ASTM D6556-04): 822 m²/g
Mittlerer Porendurchmesser: 26,82 Å
Mikroporenvolumen (Carbon Black): 0,2548 cm³/g
Mikroporenoberfläche (Carbon Black): 593 m²/g
Beladungskapazität mit Neopentan bei 24,3 °C:
Relativdruck 0,0005 bar: 4,03 Gew.-%
Relativdruck 0,0040 bar: 6,83 Gew.-%
Relativdruck 0,0650 bar: 13,52 Gew.-%
Relativdruck 0,3012 bar: 24,00 Gew.-%
Beladungskapazität mit Ammoniak bei 25,7 °C:
Relativdruck 0,0584 bar: 6,00 Gew.-%
Relativdruck 0,4114 bar: 21,38 Gew.-%

## Patentansprüche

1. Filtermaterial aufweisend, eine Einheit, wobei die Einheit eine Mehrzahl von Partikeln auf Basis von porösen organischen Polymeren umfasst, wobei die organischen Polymere durch Poly(acetylcyclotrimerisierung) von polyacetylfunktionalisierten Aromaten und/oder polyacetylfunktionalisierten Polycyclen erhältlich sind, wobei die Polymerpartikel in Pulverform oder in Kornform oder in Form von Agglomeraten vorliegen und wobei die Polymerpartikel auf mindestens einem Träger aufgebracht und/oder hieran fixiert sind.

2. Filtermaterial nach Anspruch 1, **dadurch gekennzeichnet,**
• **dass** die Poly(acetylcyclotrimerisierung) unter Katalyse, vorzugsweise säurekatalysiert, durchgeführt wird, insbesondere wobei der eingesetzte Katalysator ausgewählt wird aus der Gruppe von anorganischen und/oder organischen Säuren oder deren Salzen, Halogenwasserstoffen, Lewis-Säuren sowie deren Mischungen oder Kombinationen, und/oder
• **dass** die Poly(acetylcyclotrimerisierung) als Festkörper- und/oder Feststoffreaktion oder als Reaktion in flüssiger Phase, insbesondere in Lösung oder Dispersion, durchgeführt wird und/oder
• **dass** die Poly(acetylcyclotrimerisierung) bei Temperaturen im Bereich von -50 °C bis 250 °C, insbesondere -5 °C bis 200 °C, vorzugsweise 0 °C bis 150 °C, durchgeführt wird und/oder
• **dass** die Poly(acetylcyclotrimerisierung) bei einem Druck im Bereich von 0,01 bis 50 bar absolut, insbesondere 0,1 bis 10 bar absolut, vorzugsweise unter Atmosphärendruck (1,013 bar absolut), durchgeführt wird.

3. Filtermaterial nach Anspruch 1 oder 2, **dadurch gekennzeichnet, dass** die organischen Polymere jeweils eine nichtlineare vernetzte, insbesondere zwei- und/oder dreidimensional vernetzte, vorzugsweise sternförmig und/oder tetraederförmig vernetzte, Struktur aufweisen.

4. Filtermaterial nach einem der vorangehenden Ansprüche, **dadurch gekennzeichnet, dass** die organischen Polymere jeweils eine Vielzahl sich wiederholender Struktureinheiten vom Typ eines 1,3,5-substituierten Phenylrests mit jeweils aromatischen und/oder polycyclischen Resten in der 1-, 3- und 5-Position aufweisen, insbesondere wobei die Anzahl der sich wiederholenden Struktureinheiten je Polymermolekül mindestens 25, insbesondere mindestens 50, vorzugsweise mindestens 75, besonders bevorzugt mindestens 100, beträgt und/oder insbesondere wobei die Anzahl der sich wiederholenden Struktureinheiten je Poly-mermolekül bis zu 10.000.000, insbesondere bis zu 5.000.000, vorzugsweise bis zu 1.000.000, besonders bevorzugt bis zu 500.000, beträgt und/oder insbesondere wobei die Anzahl der sich wiederholenden Struktureinheiten je Polymermolekül im Bereich von 25 bis 10.000.000, insbesondere 50 bis 5.000.000, vorzugsweise 75 bis 1.000.000, besonders bevorzugt 100 bis 500.000, liegt.

5. Filtermaterial nach einem der vorangehenden Ansprüche, **dadurch gekennzeichnet, dass** die organischen Polymere jeweils eine Vielzahl sich wiederholender Struktureinheiten vom Typ 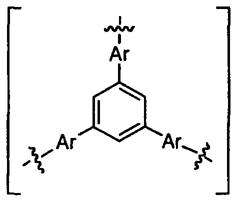 aufweisen, wobei die Reste Ar, Ar' und Ar", jeweils unabhängig voneinander, einen gegebenenfalls substituierten aromatischen oder polycyclischen, vorzugsweise aromatischen Rest bezeichnen,
insbesondere wobei die Anzahl der sich wiederholenden Struktureinheiten je Polymermolekül mindestens 25, insbesondere mindestens 50, vorzugsweise mindestens 75, besonders bevorzugt mindestens 100, beträgt und/oder insbesondere wobei die Anzahl der sich wiederholenden Struktureinheiten je Polymermolekül bis zu 10.000.000, insbesondere bis zu 5.000.000, vorzugsweise bis zu 1.000.000, besonders bevorzugt bis zu 500.000, beträgt und/oder insbesondere wobei die Anzahl der sich wiederholenden Struktureinheiten je Polymermolekül im Bereich von 25 bis 10.000.000, insbesondere 50 bis 5.000.000, vorzugsweise 75 bis 1.000.000, besonders bevorzugt 100 bis 500.000, liegt.

6. Filtermaterial nach einem der vorangehenden Ansprüche, **dadurch gekennzeichnet, dass** die organischen Polymere jeweils eine Vielzahl sich wiederholender Struktureinheiten vom Typ 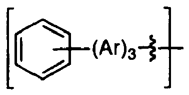 aufweisen, wobei der Rest Ar einen gegebenenfalls substituierten aromatischen oder polycyclischen, vorzugsweise aromatischen Rest bezeichnet,
insbesondere wobei die Anzahl der sich wiederholenden Struktureinheiten je Polymermolekül mindestens 25, insbesondere mindestens 50, vorzugsweise mindestens 75, besonders bevorzugt mindestens 100, beträgt und/oder insbesondere wobei die Anzahl der sich wiederholenden Struktureinheiten je Polymermolekül bis zu 10.000.000, insbesondere bis zu 5.000.000, vorzugsweise bis zu 1.000.000, besonders bevorzugt bis zu 500.000, beträgt und/oder insbesondere wobei die Anzahl der sich wiederholenden Struktureinheiten je Polymermolekül im Bereich von 25 bis 10.000.000, insbesondere 50 bis 5.000.000, vorzugsweise 75 bis 1.000.000, besonders bevorzugt 100 bis 500.000, liegt.

7. Filtermaterial nach einem der vorangehenden Ansprüche, **dadurch gekennzeichnet, dass** die polyacetylfunktionalisierten Aromaten oder Polycyclen mindestens zwei Acetylgruppen je Molekül, insbesondere zwei, drei oder vier Acetylgruppen je Molekül, aufweisen und/oder dass die polyacetylfunktionalisierten Aromaten oder Polycyclen mindestens zweifach acetylgruppensubstituiert, insbesondere zwei-, drei- oder vierfach acetylgruppensubstituiert, sind.

8. Filtermaterial nach einem der vorangehenden Ansprüche, **dadurch gekennzeichnet, dass** die polyacetylfunktionalisierten Aromaten oder Polycyclen ausgewählt sind aus der Gruppe der folgenden Verbindungen und ihrer Kombinationen oder Mischungen, wobei in den nachfolgenden Formeln der Rest "Ac" eine Acetylgruppe CH₃-C(O)- bezeichnet und der Rest "R", jeweils unabhängig, Wasserstoff oder einen organischen Rest, insbesondere ausgewählt aus der Gruppe von Alkyl, Alkenyl, Alkinyl, Alkoxy und Aryl, einem Halogen oder einer Amingruppe, bezeichnet:

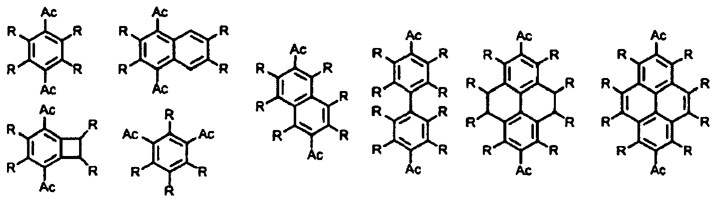

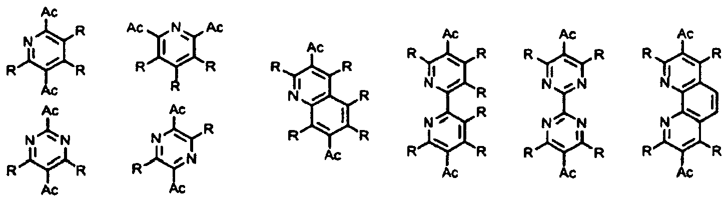

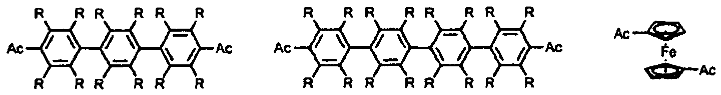

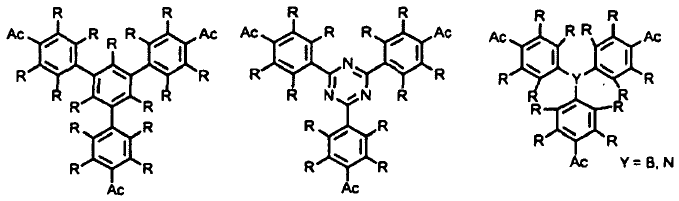

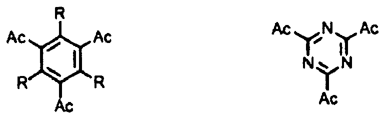

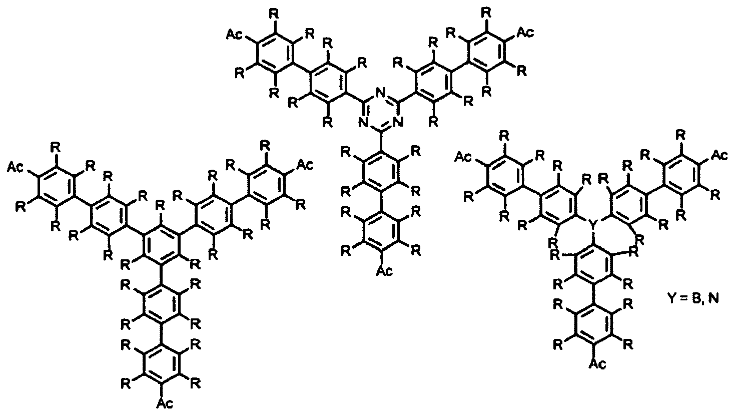

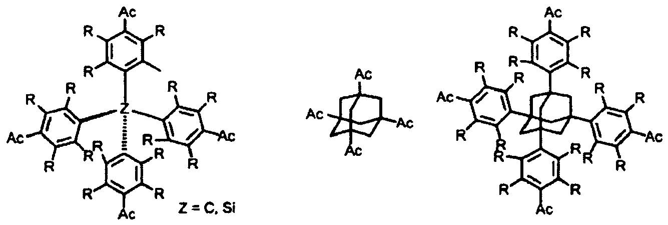

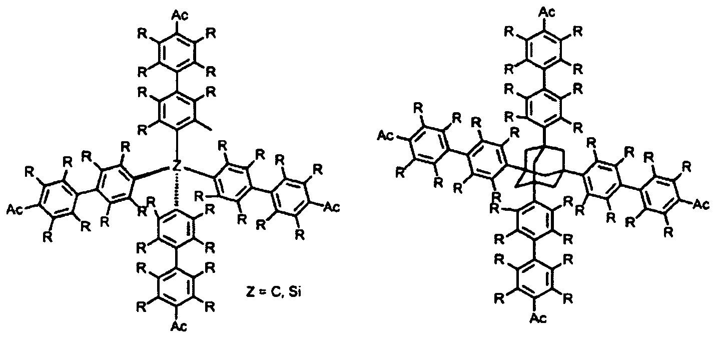

9. Filtermaterial nach einem der vorangehenden Ansprüche, **dadurch gekennzeichnet,**
**dass** der Träger ausgewählt ist aus textilen Materialien, Trägermaterialien für Katalysatoren, Kunststoffen, keramischen Materialien, metallischen Materialien oder deren Kombinationen und/oder
**dass** der Träger, insbesondere das textile Trägermaterial, gasdurchlässig, insbesondere luftdurchlässig, ausgebildet ist, insbesondere wobei der Träger eine Gasdurchlässigkeit, insbesondere Luftdurchlässigkeit, von mindestens 10 l·m⁻²·s⁻¹, insbesondere mindestens 30 l·m⁻²·s⁻¹, vorzugsweise mindestens 50 l·m⁻².s⁻¹, besonders bevorzugt mindestens 100 l·m⁻²·s⁻¹, ganz besonders bevorzugt mindestens 500 l·m⁻²·s⁻¹, und/oder bis zu 10.000 l·m⁻²·s⁻¹, insbesondere bis zu 20.000 l·m⁻²·s⁻¹, bei einem Strömungswiderstand von 127 Pa aufweist, und/oder
**dass** der Träger eine dreidimensionale Struktur aufweist, insbesondere wobei der Träger als vorzugsweise offenporiger Schaumstoff, besonders bevorzugt Polyurethanschaumstoff, ausgebildet ist, oder aber dass der Träger eine zweidimensionale und/oder flächige Struktur aufweist, insbesondere wobei der Träger als vorzugsweise textiles Flächengebilde ausgebildet ist, insbesondere als ein Gewebe, Gewirke, Gestricke, Gelege oder Textilverbundstoff, insbesondere Vlies (Non-woven), und/oder insbesondere wobei der Träger ein Flächengewicht von 5 bis 1.000 g/m², insbesondere 10 bis 500 g/m², bevorzugt 25 bis 450 g/m², aufweist.

10. Filtermaterial nach einem der vorangehenden Ansprüche, **dadurch gekennzeichnet,**
**dass** die Polymerpartikel bevorzugt in Kugelform vorliegen und/oder dass die Polymerpartikel oder deren Agglomerate Teilchengrößen im Bereich von 0,0001 µm bis 10 mm, insbesondere 0,001 µm bis 5 mm, vorzugsweise 0,005 µm bis 3 mm, besonders bevorzugt 0,01 µm bis 2 mm, ganz besonders bevorzugt 0,1 µm bis 1,5 mm, aufweisen und/oder
**dass** die Polymerpartikel ein Gesamtporenvolumen von mindestens 0,05 cm³/g, insbesondere mindestens 0,1 cm³/g, vorzugsweise mindestens 0,2 cm³/g, aufweisen und/oder
**dass** die Polymerpartikel ein Gesamtporenvolumen von bis zu 2,0 cm³/g, insbesondere bis zu 3,0 cm³/g, vorzugsweise bis zu 4,0 cm³/g, besonders bevorzugt bis zu 5,0 cm³/g, aufweisen
**dass** die Polymerpartikel ein Gesamtporenvolumen im Bereich von 0,05 cm³/g bis 5,0 cm³/g, insbesondere 0,1 cm³/g bis 4,0 cm³/g, vorzugsweise 0,2 cm³/g bis 3,0 cm³/g, aufweisen und/oder
**dass** mindestens 20 %, insbesondere mindestens 30 %, vorzugsweise mindestens 40 %, besonders bevorzugt mindestens 50 %, des Gesamtporenvolumens der Polymerpartikel durch Mikroporen mit Porendurchmessern von ≤ 20 Å gebildet sind und/oder
**dass** 20 % bis 99 %, insbesondere 30 % bis 95 %, vorzugsweise 40 % bis 90 %, besonders bevorzugt 50 % bis 80 %, des Gesamtporenvolumens der Polymerpartikel durch Mikroporenporen mit Porendurchmessern von ≤ 20 Å gebildet sind und/oder
**dass** das durch Mikroporen mit Porendurchmessern von ≤ 20 Å gebildete Mikroporenvolumen der Polymerpartikel im Bereich von 0,01 bis 1,5 cm³/g, insbesondere 0,02 bis 1,2 cm³/g, bevorzugt 0,05 bis 1 cm³/g, liegt.

11. Filtermaterial nach einem der vorangehenden Ansprüche, **dadurch gekennzeichnet,**
**dass** der mittlere Porendurchmesser der Polymerpartikel höchstens 100 Å, insbesondere höchstens 50 Å, bevorzugt höchstens 30 Å, beträgt und/oder
**dass** der mittlere Porendurchmesser der Polymerpartikel im Bereich von 1 bis 100 Å, insbesondere 2 bis 75 Å, vorzugsweise 5 bis 50 Å, besonders bevorzugt 10 bis 30 Å, liegt und/oder
**dass** die BET-Oberfläche der Polymerpartikel mindestens 100 m²/g, insbesondere mindestens 200 m²/g, vorzugsweise mindestens 250 m²/g, bevorzugt mindestens 300 m²/g, besonders bevorzugt mindestens 400 m²/g, beträgt und/oder
**dass** die BET-Oberfläche der Polymerpartikel bis zu 1.800 m²/g, insbesondere bis zu 2.000 m²/g, vorzugsweise bis zu 2.500 m²/g, besonders bevorzugt bis zu 3.000 m²/g, ganz besonders bevorzugt bis zu 6.000 m²/g, noch mehr bevorzugt bis zu 7.000 m²/g, beträgt und/oder
**dass** die BET-Oberfläche der Polymerpartikel im Bereich von 100 m²/g bis 7.000 m²/g, insbesondere 150 bis 6.000 m²/g, vorzugsweise 200 bis 3.000 m²/g, besonders bevorzugt 225 bis 2.500 m²/g, ganz besonders bevorzugt 250 bis 2.000 m²/g, noch mehr bevorzugt 275 bis 1.800 m²/g, liegt.

12. Filtermaterial nach einem der vorangehenden Ansprüche, **dadurch gekennzeichnet**, die organischen Polymere und/oder Polymerpartikel nach erfolgter Poly(acetylcyclotrimerisierung) modifiziert werden, insbesondere mittels Nachvernetzung der Polymere und/oder mittels Funktionalisierung, bevorzugt an den Aromaten oder Polycyclen und/oder an gegebenenfalls noch vorhandenen, insbesondere endständigen Acetylgruppen.

13. Filtermaterial nach einem der vorangehenden Ansprüche, **dadurch gekennzeichnet, dass** die Polymerpartikel bei einem Druck von 1 bar und einer Temperatur von 77 K eine Wasserstoffspeicher- und/oder Wasserstoffbeladungskapazität von 0,1 bis 50 Gew.-%, insbesondere 0,2 bis 30 Gew.-%, vorzugsweise 0,5 bis 25 Gew.-%, bezogen auf die Polymerpartikel, aufweisen.

14. Filtermaterial nach einem der vorangehenden Ansprüche, **dadurch gekennzeichnet, dass** die Polymerpartikel zusammen mit einem weiteren, aber hiervon verschiedenen partikulären porösen Material, insbesondere Adsorbens, eingesetzt oder kombiniert werden, insbesondere wobei das weitere Material ausgewählt sein kann aus der Gruppe von Aktivkohle, insbesondere kornförmiger Aktivkohle, vorzugsweise kugelförmiger Aktivkohle; Zeolithen; porösen Metalloxid- und/oder Metallpartikeln; Ionenaustauscherharzen; anorganischen Oxiden, insbesondere Siliziumdioxiden, Silicagelen und/oder Aluminiumoxiden; porösen organisch-anorganischen Hybridpolymeren; metallorganischen Gerüstmaterialien, insbesondere MOFs (*Metall Organic Frameworks*); mineralischen Granulaten; Klathraten; sowie deren Mischungen und/oder Kombinationen, und besonders bevorzugt Aktivkohle sein kann.

15. Filtermaterial nach einem der vorangehenden Ansprüche, **dadurch gekennzeichnet, dass** das Filtermaterial ein textiles Filtermaterial ist.

## Claims

1. A filter material with a unit, the unit comprising a plurality of particles based on porous organic polymers, wherein the organic polymers may be obtained by means of poly(acetylcyclotrimerization) of polyacetyl-functionalized aromatics and/or polyacetyl-functionalized polycycles, wherein the polymer particles are present in the form of powder, or in the form of grain, or in the form of agglomerates, and wherein the polymer particles are attached and/or affixed to at least one carrier.

2. The filter material according to claim 1, **characterized in that**
• the poly(acetylcyclotrimerization) is carried out under catalysis, preferably is acid-catalyzed, in particular wherein the catalyst used is selected from the group of inorganic and/or organic acids, or the salts thereof, hydrogen halides, Lewis acids, as well as the mixtures or combinations thereof, and/or
• the poly(acetylcyclotrimerization) is carried out as a solid body and/or solid matter reaction, or as a reaction in liquid phase, in particular in solution or dispersion, and/or
• the poly(acetylcyclotrimerization) is carried out at temperatures in the range of -50°C to 250°C, in particular -5°C to 200°C, preferably 0°C to 150°C, and/or
• the poly(acetylcyclotrimerization) is carried out at a pressure in the range of 0.01 to 50 bars absolute, in particular 0.1 to 10 bars absolute, preferably under atmospheric pressure (1.013 bars absolute).

3. The filter material according to claims 1 or 2, **characterized in that** the organic polymers each have a non-linearly cross-linked, in particular two and/or three-dimensionally cross-linked, preferably radially and/or triangularly cross-linked structure.

4. The filter material according to one of the previous claims, **characterized in that** the organic polymers each have a plurality of repeating structural units of the type of a 1,3,5-substituted phenyl residue, each having aromatic and/or polycyclic residues in the 1-, 3- and 5-position, in particular wherein the number of repeating structural units per polymer molecule is at least 25, in particular at least 50, preferably at least 75, particularly preferred at least 100, and/or in particular wherein the number of repeating structural units per polymer molecule is up to 10,000,000, in particular up to 5,000,000, preferably up to 1,000,000, particularly preferred up to 500,000, and/or in particular wherein the number of repeating structural units per polymer molecule is in the range of 25 to 10,000,000, in particular 50 to 5,000,000, preferably 75 to 1,000,000, particularly preferred 100 to 500,000.

5. The filter material according to one of the previous claims, **characterized in that** the organic polymers each have a plurality of repeating structural units of the type 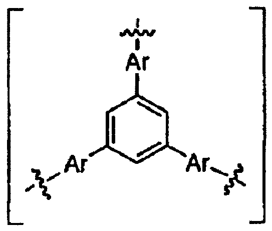 wherein residues Ar, Ar', and Ar" each independently of each other denote an optionally substituted aromatic, or polycyclic, preferably aromatic residue,
in particular wherein the number of repeating structural units per polymer molecule is at least 25, in particular at least 50, preferably at least 75, particularly preferred at least 100, and/or in particular wherein the number of repeating structural units per polymer molecule is up to 10,000,000, in particular up to 5,000,000, preferably up to 1,000,000, particularly preferred up to 500,000, and/or in particular wherein the number of repeating structural units per polymer molecule is in the range of 25 to 10,000,000, in particular 50 to 5,000,000, preferably 75 to 1,000,000, particularly preferred 100 to 500,000.

6. The filter material according to one of the previous claims, **characterized in that** the organic polymers each have a plurality of repeating structural units of the type 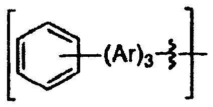 wherein residue Ar denotes an optionally substituted aromatic, or polycyclic, preferably aromatic residue,
in particular wherein the number of repeating structural units per polymer molecule is at least 25, in particular at least 50, preferably at least 75, particularly preferred at least 100, and/or in particular wherein the number of repeating structural units per polymer molecule is up to 10,000,000, in particular up to 5,000,000, preferably up to 1,000,000, particularly preferred up to 500,000, and/or in particular wherein the number of repeating structural units per polymer molecule is in the range of 25 to 10,000,000, in particular 50 to 5,000,000, preferably 75 to 1,000,000, particularly preferred 100 to 500,000.

7. The filter material according to one of the previous claims, **characterized in that** the polyacetyl-functionalized aromatics or polycycles have at least two acetyl groups per molecule, in particular two, three, or four acetyl groups per molecule, and/or the polyacetyl-functionalized aromatics or polycycles are at least double acetyl group substituted, in particular double, triple, or quadruple acetyl group substituted.

8. The filter material according to one of the previous claims, **characterized in that** the polyacetyl-functionalized aromatics or polycycles are selected from the group of the following compounds, and the combinations or mixtures thereof, wherein in the following formulas residue "Ac" denotes an acetyl group CH₃-C(O)-, and residue "R" each independently denotes hydrogen, or an organic residue, in particular selected from the group of alkyl, alkenyl, alkinyl, alkoxy, and aryl, a halogen, or an amine group:

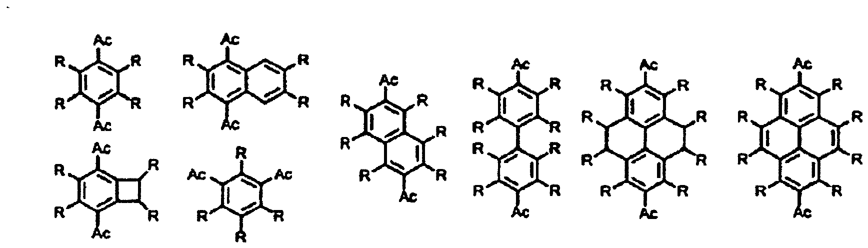

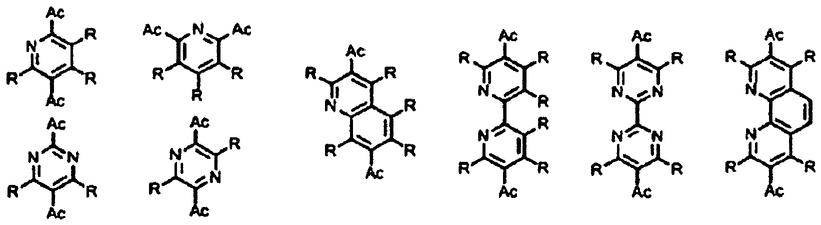

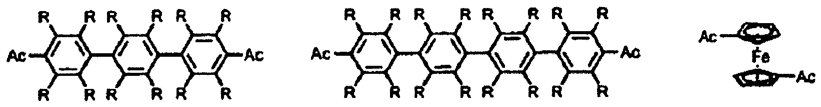

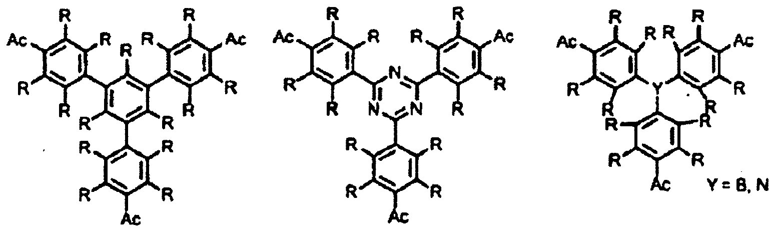

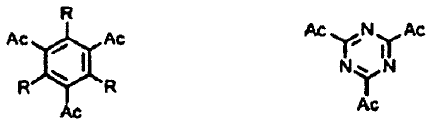

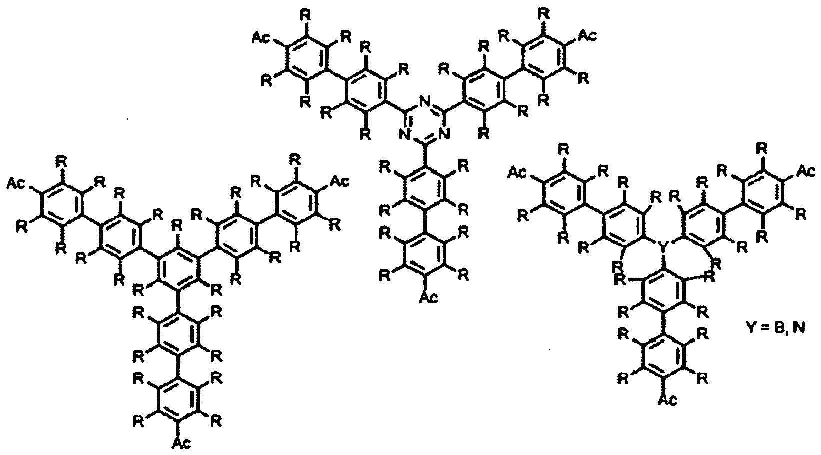

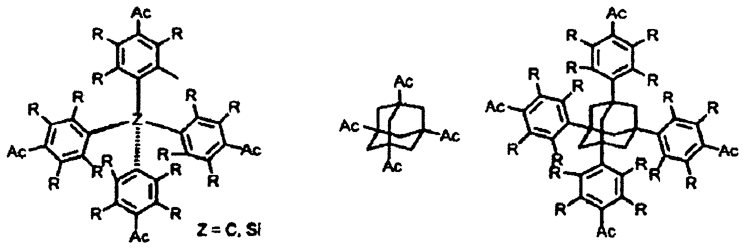

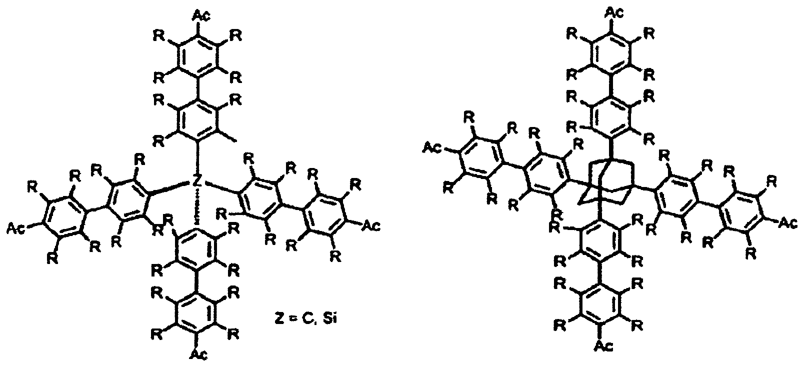

9. The filter material according to one of the previous claims, **characterized in that** the carrier is selected from textile materials, carrier materials for catalysts, plastics, ceramic materials, metallic materials, or the combinations thereof, and/or
the carrier, in particular the textile carrier material, is embodied in a gas permeable manner, in particular air permeable manner, in particular wherein the carrier has a gas permeability, in particular air permeability, of at least 10 l·m⁻²·s⁻¹, particularly at least 30 l·m⁻²·s⁻¹, preferably at least 50 l·m⁻²·s⁻¹, particularly preferred at least 100 l·m⁻²·s⁻¹, most preferred at least 500 l·m⁻²·s⁻¹,, and/or up to 10,000 l·m⁻²·s⁻¹, particularly up to 20,000 l·m⁻²·s⁻¹, at a flow resistance of 127 Pa, and/or
the carrier has a three-dimensional structure, in particular wherein the carrier is embodied as a preferably open-pored foam, particularly preferred as a polyurethane foam, or the carrier has a two-dimensional and/or plane structure, in particular wherein the carrier is embodied preferably as a textile fabric, in particular a woven fabric, knit fabric, knitted fabric, non-woven fabric, in particular non-woven, and/or in particular wherein the carrier has a surface weight of 5 to 1,000 g/m², in particular 10 to 500 g/m², preferably 25 to 450 g/m².

10. The filter material according to one of the previous claims, **characterized in that** the polymer particles are present preferably in spherical shape, and/or
the polymer particles, or the agglomerates thereof, have particle sizes in the range of 0.0001 µm to 10 mm, in particular 0.001 µm to 5 mm, preferably 0.005 µm to 3 mm, particularly preferred 0.01 µm to 2 mm, most preferred 0.1 µm to 1.5 mm, and/or
the polymer particles have a total pore volume of at least 0.05 cm³/g, in particular at least 0.1 cm³/g, preferably at least 0.2 cm³/g, and/or
the polymer particles have a total pore volume of up to 2.0 cm³/g, in particular up to 3.0 cm³/g, preferably up to 4.0 cm³/g, particularly preferred up to 5.0 cm³/g,,
the polymer particles have a total pore volume in the range of 0.05 cm³/g, to 5.0 cm³/g, in particular 0.1 cm³/g, to 4.0 cm³/g, preferably 0.2 cm³/g, to 3.0 cm³/g, and/or
at least 20%, in particular at least 30%, preferably at least 40%, particularly preferred at least 50% of the total pore volume of the polymer particles are formed by means of micropores having pore diameters of ≤ 20 Å, and/or 20% to 99%, in particular 30% to 95%, preferably 40% to 90%, particularly preferred 50% to 80% of the total pore volume of the polymer particles are formed by means of micropores having pore diameters of ≤ 20 Å, and/or
the micropore volume of the polymer particles, formed by means of micropores having pore diameters of ≤ 20 Å, is in the range of 0.01 to 1.5 cm³/g, in particular 0.02 to 1.2 cm³/g, preferably 0.05 to 1 cm³/g.

11. The filter material according to one of the previous claims, **characterized in that** the mean pore diameter of the polymer particles is not more than 100 Å, in particular not more than 50 Å, preferably not more than 30 Å, and/or
the mean pore diameter of the polymer particles is in the range of 1 to 100 Å, in particular 2 to 75 Å, preferably 5 to 50 Å, particularly preferred 10 to 30 Å, and/or
the BET surface of the polymer particles is at least 100 cm²/g, in particular at least 200 cm²/g, preferably at least 250 cm²/g, preferred at least 300 cm²/g, particularly preferred at least 400 cm²/g, and/or
the BET surface of the polymer particles is up to 1,800 cm²/g, in particular up to 2,000 cm²/g, preferably up to 2,500 cm²/g, particularly preferred up to 3,000 cm²/g, more preferred up to 6,000 cm²/g, most preferred up to 7,000 cm²/g, and/or
the BET surface of the polymer particles is in the range of 100 cm²/g to 7,000 cm²/g, in particular 150 to 6,000 cm²/g, preferably 200 to 3,000 cm²/g, particularly preferred 225 to 2,500 cm²/g, more preferred 250 to 2,000 cm²/g, most preferred 275 to 1,800 cm²/g.

12. The filter material according to one of the previous claims, **characterized in that** the organic polymers and/or polymer particles are modified after completed poly(acetylcyclotrimerization), in particular by means of retro-cross-linking of the polymers, and/or by means of functionalization, preferably on the aromatics or polycycles, and/or optionally on any remaining, in particular terminal acetyl groups.

13. The filter material according to one of the previous claims, **characterized in that** at a pressure of 1 bar, and a temperature of 77 K, the polymer particles have a hydrogen storage and/or hydrogen load capacity of 0.1 to 50% by weight, in particular 0.2 to 30% by weight, preferably 0.5 to 25% by weight, based on the polymer particles.

14. The filter material according to one of the previous claims, **characterized in that** the polymer particles may be utilized together, or combined, with an additional, but different particulate, porous material, in particular an adsorbent, in particular wherein the additional material may be selected from the group of activated carbon, in particular granular activated carbon, preferably spherical activated carbon; zeolites; porous metal oxide, and/or metal particles; ion-exchange resins; inorganic oxides, in particular silica, silica gels, and/or alumina; porous organic-inorganic hybrid polymers; organometallic frameworks materials, in particular MOFs (*metal organic frameworks*); mineral granulates; clathrates; as well as the mixtures and/or combinations thereof, and may particularly preferably be activated carbon.

15. The filter material according to one of the previous claims, **characterized in that** the filter material is a textile filter material.

## Revendications

1. Matériau filtrant comprenant une unité, l'unité comprenant un grand nombre de particules à base de polymères organiques poreux, les polymères organiques pouvant être obtenus par poly(acétylcyclotrimérisation) de composés aromatiques à fonctionnalisation polyacétyle et/ou de composés polycycliques à fonctionnalisation polyacétyle, les particules polymères se présentant sous forme d'une poudre ou sous forme de grains ou sous forme d'agglomérats, et les particules polymères étant appliquées au moins sur un support et/ou y étant fixées.

2. Matériau filtrant selon la revendication 1, **caractérisé**
• **en ce que** la poly(acétylcyclotrimérisation) est mise en oeuvre sous catalyse, de préférence sous catalyse acide, le catalyseur utilisé étant en particulier choisi dans le groupe des acides inorganiques et/ou organiques ou de leurs sels, des halogénures d'hydrogène, des acides de Lewis, ainsi que de leurs mélanges ou combinaisons, et/ou
• **en ce que** la poly(acétylcyclotrimérisation) est mise en oeuvre sous forme d'une réaction entre corps solides et/ou en phase solide, ou sous forme d'une réaction en phase liquide, en particulier en solution ou en dispersion, et/ou
• **en ce que** la poly(acétylcyclotrimérisation) est mise en oeuvre à des températures comprises dans la plage de -50°C à 250°C, en particulier de -5°C à 200°C, de préférence de 0°C à 150°C, et/ou
• **en ce que** la poly(acétylcyclotrimérisation) est mise en oeuvre sous une pression comprise dans la plage de 0,01 à 50 bars absolus, en particulier de 0,1 à 10 bars absolus, de préférence sous la pression atmosphérique (1,013 bars absolus).

3. Matériau filtrant selon la revendication 1 ou 2, **caractérisé en ce que** chacun des polymères organiques présente une structure réticulée non linéaire, en particulier réticulée bi- et/ou tridimensionnelle, de préférence réticulée en étoile et/ou en tétraèdre.

4. Matériau filtrant selon l'une des revendications précédentes, **caractérisé en ce que** chacun des polymères organiques comprend un grand nombre de motifs structuraux répétitifs du type radical phényle 1,3,5-substitué, chacun comportant des radicaux aromatiques et/ou polycycliques sur les positions 1, 3 et 5, le nombre de motifs structuraux répétitifs étant en particulier, pour chaque molécule polymère, d'au moins 25, en particulier d'au moins 50, de préférence d'au moins 75, d'une manière particulièrement préférée d'au moins 100, et/ou le nombre de motifs structuraux répétitifs allant, par molécule polymère, jusqu'à 10 000 000, en particulier jusqu'à 5 000 000, de préférence jusqu'à 1 000 000, d'une manière particulièrement préférée jusqu'à 500 000, et/ou le nombre de motifs structuraux répétitifs étant compris, par molécule polymère, dans la plage de 25 à 10 000 000, en particulier de 50 à 5 000 000, de préférence de 75 à 1 000 000, d'une manière particulièrement préférée de 100 à 500 000.

5. Matériau filtrant selon l'une des revendications précédentes, **caractérisé en ce que** chacun des polymères organiques comprend un grand nombre de motifs structuraux répétitifs du type 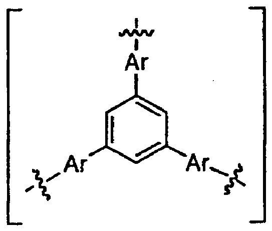 dans laquelle chacun des radicaux Ar, Ar' et Ar" désigne, indépendamment des autres, un radical aromatique ou polycyclique, de préférence aromatique, éventuellement
substitué,
le nombre de motifs structuraux répétitifs étant en particulier, pour chaque molécule polymère, d'au moins 25, en particulier d'au moins 50, de préférence d'au moins 75, d'une manière particulièrement préférée d'au moins 100, et/ou le nombre de motifs structuraux répétitifs allant, par molécule polymère, jusqu'à 10 000 000, en particulier jusqu'à 5 000 000, de préférence jusqu'à 1 000 000, d'une manière particulièrement préférée jusqu'à 500 000, et/ou le nombre de motifs structuraux répétitifs étant compris, par molécule polymère, dans la plage de 25 à 10 000 000, en particulier de 50 à 5 000 000, de préférence de 75 à 1 000 000, d'une manière particulièrement préférée de 100 à 500 000.

6. Matériau filtrant selon l'une des revendications précédentes, **caractérisé en ce que** chacun des polymères organiques comprend un grand nombre de motifs structuraux répétitifs du type 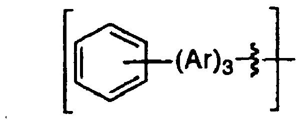 le radical Ar désignant un radical aromatique ou polycyclique, de préférence aromatique, éventuellement substitué,
le nombre de motifs structuraux répétitifs étant en particulier, pour chaque molécule polymère, d'au moins 25, en particulier d'au moins 50, de préférence d'au moins 75, d'une manière particulièrement préférée d'au moins 100, et/ou le nombre de motifs structuraux répétitifs allant, par molécule polymère, jusqu'à 10 000 000, en particulier jusqu'à 5 000 000, de préférence jusqu'à 1 000 000, d'une manière particulièrement préférée jusqu'à 500 000, et/ou le nombre de motifs structuraux répétitifs étant compris, par molécule polymère, dans la plage de 25 à 10 000 000, en particulier de 50 à 5 000 000, de préférence de 75 à 1 000 000, d'une manière particulièrement préférée de 100 à 500 000.

7. Matériau filtrant selon l'une des revendications précédentes, **caractérisé en ce que** les composés aromatiques ou polycycliques à fonctionnalisation polyacétyle comprennent au moins deux groupes acétyle par molécule, en particulier deux, trois ou quatre groupes acétyle par molécule, et/ou **en ce que** les composés aromatiques ou polycycliques à fonctionnalisation polyacétyle sont au moins deux fois substitués par des groupes acétyle, en particulier sont substitués par deux, trois ou quatre groupes acétyle.

8. Matériau filtrant selon l'une des revendications précédentes, **caractérisé en ce que** les composés aromatiques ou polycycliques à fonctionnalisation polyacétyle sont choisis dans le groupe des composés ci-après et de leurs combinaisons ou mélanges ; dans les formules ci-après, le radical "Ac" désigne un groupe acétyle CH₃-C(O)-, et chacun des radicaux "R" désigne d'une manière indépendante un atome d'hydrogène ou un radical organique, choisi en particulier dans le groupe consistant en les groupes alkyle, alcényle, alcynyle, alcoxy et aryle, les halogènes, ou un groupe amino :

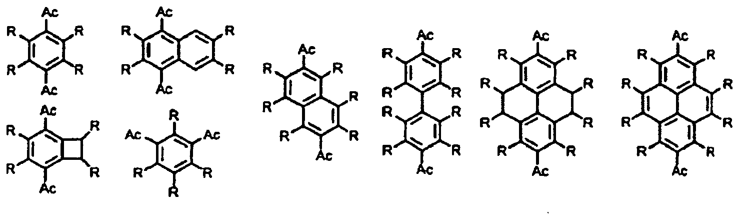

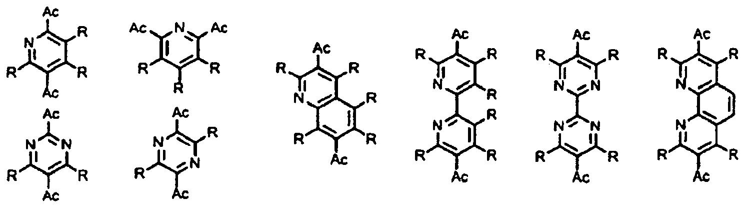

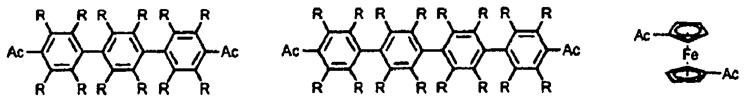

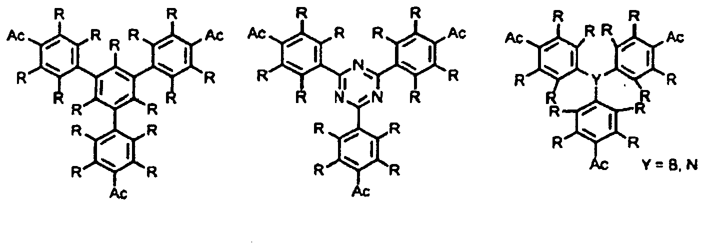

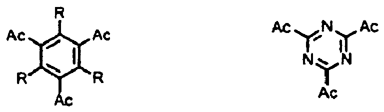

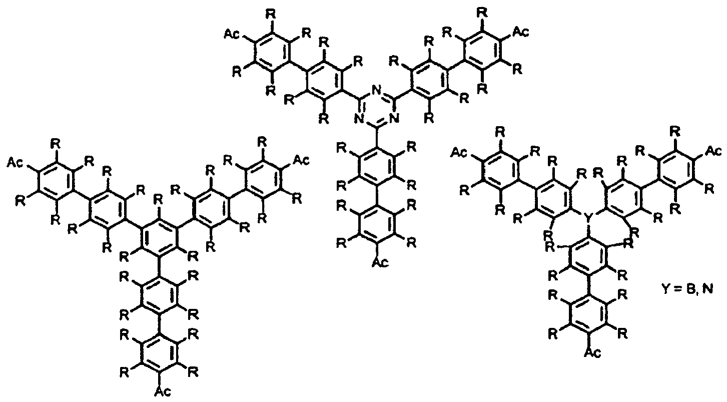

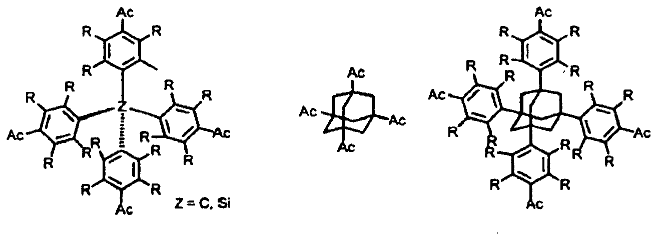

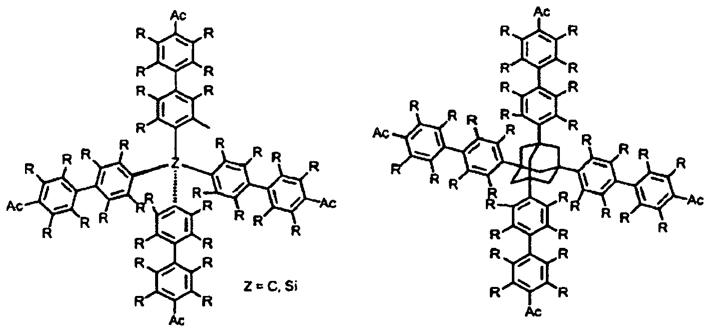

9. Matériau filtrant selon l'une des revendications précédentes, **caractérisé**
**en ce que** le support est choisi parmi les matériaux textiles, les matériaux supports pour catalyseurs, les matériaux plastiques, les matériaux céramiques, les matériaux métalliques ou les combinaisons de ceux-ci, et/ou
**en ce que** le support, en particulier le matériau support textile, est configuré de façon à être perméable aux gaz, en particulier perméable à l'air, le support présentant une perméabilité aux gaz, en particulier une perméabilité à l'air, d'au moins 10 l.m⁻².s⁻¹, en particulier d'au moins 30 l.m⁻².s⁻¹, de préférence d'au moins 50 l.m⁻².s⁻¹, d'une manière particulièrement préférée d'au moins 100 l.m⁻².s⁻¹, d'une manière tout particulièrement préférée d'au moins 500 l.m⁻².s⁻¹, et/ou allant jusqu'à 10 000 l.m⁻².s⁻¹, en particulier jusqu'à 20 000 l.m⁻².s⁻¹ pour une résistance à l'écoulement de 127 Pa, et/ou
**en ce que** le support présente une structure tridimensionnelle, le support étant configuré en particulier sous forme d'un matériau expansé de préférence à pores ouverts, d'une manière particulièrement préférée sous forme d'une mousse de polyuréthanne, ou cependant en ce que le support présente une structure bidimensionnelle et/ou plane, le support étant en particulier configuré comme une structure bidimensionnelle de préférence textile, en particulier sous forme d'un tissu, d'un tricot, d'un article de bonneterie, d'une nappe textile ou d'un composite textile, en particulier d'un non-tissé (non-woven), et/ou le support présentant une masse surfacique de 5 à 1000 g/m², en particulier de 10 à 500 g/m², de préférence de 25 à 450 g/m².

10. Matériau filtrant selon l'une des revendications précédentes, **caractérisé**
**en ce que** les particules polymères se présentent de préférence sous forme sphérique, et/ou
**en ce que** les particules polymères ou leurs agglomérats présentent une granulométrie comprise dans la plage de 0,0001 µm à 10 mm, en particulier de 0,001 µm à 5 mm, de préférence de 0,005 µm à 3 mm, d'une manière particulièrement préférée de 0,01 µm à 2 mm, d'une manière tout particulièrement préférée de 0,1 µm à 1,5 mm, et/ou
**en ce que** les particules polymères présentent un volume total des pores d'au moins 0,05 cm³/g, en particulier d'au moins 0,1 cm³/g, de préférence d'au moins 0,2 cm³/g, et/ou
**en ce que** les particules polymères présentent un volume total des pores allant jusqu'à 2,0 cm³/g, en particulier jusqu'à 3,0 cm³/g, de préférence jusqu'à 4,0 cm³/g, d'une manière particulièrement préférée jusqu'à 5,0 cm³/g,
**en ce que** les particules polymères présentent un volume total des pores compris dans la plage de 0,05 cm³/g à 5,0 cm³/g, en particulier de 0,1 cm³/g à 4,0 cm³/g, de préférence de 0,2 cm³/g à 3,0 cm³/g, et/ou
**en ce qu'**au moins 20 %, en particulier au moins 30 %, de préférence au moins 40 %, d'une manière particulièrement préférée au moins 50 % du volume total des pores des particules polymères sont constitués de micropores ayant un diamètre de pore ≤ 20 Å, et/ou
**en ce que** 20 % à 99 %, en particulier 30 % à 95 %, de préférence 40 % à 90 %, d'une manière particulièrement préférée 50 % à 80 % du volume total des pores des particules polymères sont constituées de pores microporeux ayant un diamètre de pore ≤ 20 Å, et/ou
**en ce que** le volume des micropores des particules polymères, formé par les micropores ayant un diamètres ≤ 20 Å, est compris dans la plage de 0,01 à 1,5 cm³/g, en particulier de 0,02 à 1,2 cm³/g, de préférence de 0,05 à 1 cm³/g.

11. Matériau filtrant selon l'une des revendications précédentes, **caractérisé**
**en ce que** le diamètre moyen des pores des particules polymères est d'au plus 100 Å, en particulier d'au plus 50 Å, de préférence d'au plus 30 Å, et/ou
**en ce que** le diamètre moyen des pores des particules polymères est compris dans la plage de 1 à 100 Å, en particulier de 2 à 75 Å, de préférence de 5 à 50 Å, d'une manière particulièrement préférée de 10 à 30 Å, et/ou
**en ce que** l'aire BET des particules polymères est d'au moins 100 m²/g, en particulier d'au moins 200 m²/g, de préférence d'au moins 250 m²/g, préférentiellement d'au moins 300 m²/g, d'une manière particulièrement préférée d'au moins 400 m²/g, et/ou
**en ce que** l'aire BET des particules polymères va jusqu'à 1800 m²/g, en particulier jusqu'à 2000 m²/g, de préférence jusqu'à 2500 m²/g, d'une manière particulièrement préférée jusqu'à 3000 m²/g, d'une manière tout particulièrement préférée jusqu'à 6000 m²/g, d'une manière encore plus préférée jusqu'à 7000 m²/g, et/ou
**en ce que** l'aire BET des particules polymères est comprise dans la plage de 100 m²/g à 7000 m²/g, en particulier de 150 à 6000 m²/g, de préférence de 200 à 3000 m²/g, d'une manière particulièrement préférée de 225 à 2500 m²/g, d'une manière tout particulièrement préférée de 250 à 2000 m²/g, d'une manière encore plus préférée de 275 à 1800 m²/g.

12. Matériau filtrant selon l'une des revendications précédentes, **caractérisé en ce que** les polymères organiques et/ou les particules polymères subissent une modification après la fin de la poly(acétylcyclotrimérisation), en particulier au moyen d'une post-réticulation des polymères et/ou au moyen d'une fonctionnalisation, de préférence sur les composés aromatiques ou polycycliques et/ou sur les groupes acétyle éventuellement encore présents, en particulier terminaux.

13. Matériau filtrant selon l'une des revendications précédentes, **caractérisé en ce que** les particules polymères présentent, sous une pression de 1 bar et à une température de 77 K, une capacité d'accumulation hydrogène et/ou de charge en hydrogène de 0,1 à 50 % en poids, en particulier de 0,2 à 30 % en poids, de préférence de 0,5 à 25 % en poids, par rapport aux particules polymères.

14. Matériau filtrant selon l'une des revendications précédentes, **caractérisé en ce que** les particules polymères sont utilisées en même temps qu'un matériau poreux particulaire supplémentaire, en particulier un adsorbant, mais qui en est différent, ou est combinée à ce dernier, en particulier dans lequel le matériau supplémentaire peut être choisi dans le groupe consistant en le charbon actif, en particulier le charbon actif granulaire, de préférence le charbon actif de forme sphérique ; les zéolites, les particules d'oxydes métalliques et/ou métalliques poreuses ; les résines échangeuses d'ions ; les oxydes inorganiques, en particulier les dioxydes de silicium, les gels de silice et/ou les oxydes d'aluminium ; les polymères hybrides organiques-inorganiques ; les réseaux hybrides organique-métal, en particulier les MOF (*Metal Organic Frameworks) ;* les granulés minéraux ; les clathrates ; ainsi que leurs mélanges et/ou combinaisons, et d'une manière particulièrement préférée le charbon actif.

15. Matériau selon l'une des revendications précédentes, **caractérisé en ce que** le matériau filtrant est un matériau filtrant textile.
